(19) Europäisches Patentamt
European Patent Office
Office européen des brevets

(11) **EP 2 296 423 A1**

(12) **EUROPEAN PATENT APPLICATION**
published in accordance with Art. 153(4) EPC

(43) Date of publication:
**16.03.2011 Bulletin 2011/11**

(51) Int Cl.:
*H04W 74/08* (2009.01)          *H04W 72/04* (2009.01)

(21) Application number: **09773285.3**

(22) Date of filing: **12.06.2009**

(86) International application number:
**PCT/JP2009/060747**

(87) International publication number:
**WO 2010/001707 (07.01.2010 Gazette 2010/01)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **03.07.2008 JP 2008174817**

(71) Applicant: **Sharp Kabushiki Kaisha**
**Osaka-shi, Osaka 545-8522 (JP)**

(72) Inventors:
• **SUZUKI, Shigeto**
**c/o SHARP KABUSHIKI KAISHA**
**Osaka-shi, Osaka 545-8522 (JP)**

• **YOSHIHARA, Akio**
**c/o SHARP KABUSHIKI KAISHA**
**Osaka-shi, Osaka 545-8522 (JP)**
• **SAWADA, Shinichi**
**c/o SHARP KABUSHIKI KAISHA**
**Osaka-shi, Osaka 545-8522 (JP)**
• **KOBAYASHI, Hirokazu**
**c/o SHARP KABUSHIKI KAISHA**
**Osaka-shi, Osaka 545-8522 (JP)**
• **SUZUKI, Kohki**
**c/o SHARP KABUSHIKI KAISHA**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **WIRELESS COMMUNICATION SYSTEM, COMMUNICATION DEVICE, WIRELESS COMMUNICATION METHOD, AND WIRELESS COMMUNICATION PROGRAM**

(57) In a reception apparatus that receives random access signals transmitted from a transmission apparatus by being allocated to preset resources, the reception apparatus includes a resource allocation configuration candidate storage section that stores in advance a plurality of different resource allocation configurations which are obtained by combining the resources and have different sizes of the combined resources, a resource allocation configuration decision section that decides a resource allocation configuration from resource allocation configurations stored in the resource allocation configuration candidate storage section based on a value indicating a receiving frequency of the random access signal, and a resource allocation configuration report section that reports information of the resource allocation configuration decided by the resource allocation configuration decision section.

FIG. 4

**Description**

[Field of the Invention]

The present invention relates to a wireless communication system, a communication apparatus, a wireless communication method and a wireless communication program.
This application claims priority to and the benefits of Japanese Patent Application No. 2008-174817 filed on July 03, 2008, the disclosure of which is incorporated herein by reference.

[Background Art]

Recently, the 3rd generation (3G) mobile communication system using a wideband-code division multiple access (W-CDMA) scheme has been extensively spread throughout the world. At the present time, the next generation mobile communication system for realizing higher communication is being reviewed. As the next generation mobile communication system, the 4th generation (4G) mobile communication system having a down communication speed of 100 Mbps to 1 Gbps has been reviewed. However, a large difference occurs in the system configurations of 3G and 4G.
In this regard, in order to reduce the technical and temporal gap between 3G and 4G and achieve a smooth change to 4G, evolved universal terrestrial radio access (E-UTRA) has been actively discussed in the 3rd Generation Partnership Project (3GPP). The E-UTRA uses a frequency the same as that of 3G and provides a down communication speed of about 100 Mbps by introducing new technology considered as a candidate of 4G.
In E-UTRA, an orthogonal frequency division multiplexing access (OFDMA) scheme has been proposed as a downlink. Furthermore, E-UTRA employs a plurality of modulation schemes, a technique called adaptive modulation and coding (AMC, also referred to as link adaptation in 3GPP) that adaptively changes the coding rate, the MIMO (Multiple Input Multiple Output) transmission scheme, in which the transmission side and the reception side perform data transmission/reception by using a plurality of antennas, and the like.
For a random access channel (RACH) for setting a wireless communication line in 3G a transmission timing of a random access (RA) signal is decided from an RA sub-channel and a system frame number (SFN: sub-frame number), which are reported of from a wireless base station.
In long term evolution (LTE: an evolution system of 3GPP), positions of RACH slots, to which an RA signal can be allocated in a wireless frame, are defined by 16 types of RACH slot configurations (RACH slot configurations), and an eNode B (a wireless base station apparatus) reports a terminal (a mobile station apparatus) of an RACH slot configuration to be used in a cell through report information.
The terminal having received the report information recognizes an RACH transmission timing from the received information. When communication is required, the terminal transmits an RA preamble signal (an RA signal) at the timing of an RACH slot defined by the RACH slot configuration.

Non-patent Document 1 discloses a new RACH slot configuration.

Meanwhile, Patent Document 1 discloses a method for allocating an uplink RACH in a wireless access network. Furthermore, Patent Document 2 discloses a slot selection method for calculating propagation loss, receiving the occupation state and interference amount of up slots from a base station, calculating desired wave power from the propagation loss, calculating the ratio of the interference amount with respect to the desired wave power in unoccupied slots from the desired wave power and the interference amount, and selecting a transmission slot using the ratio of the interference amount with respect to the desired wave power.

[Related Art Documents]

[Patent Documents]

[Patent Document 1] JP-A-2006-333404
[Patent Document 2] JP-A-2001-136570

[Non-patent Document]

[Non-patent Document 1] 3GPP R1-074026, Random Access E-mail Reflector Summary, Motorola, RAN1#50-bis

[Disclosure of the Invention]

[Problems to be Solved by the Invention]

However, according to the conventional art, for example, in a base station apparatus having a large number of present mobile station apparatuses with respect to a resource to which random access (RA) signals can be allocated, it may be highly probable that RA signals transmitted from the mobile station apparatuses will collide with one another, and connection quality, which represents the success rate of connection by RA of each mobile station apparatus, may be reduced.

Furthermore, in a base station apparatus having a small number of present mobile station apparatuses with respect to the resource to which the RA signals can be allocated, since the number of the RA signals transmitted from the mobile station apparatuses is small, wasted resources are ensured, so that throughput may be reduced.

In addition, in a business district of an urban area, the number of present mobile station apparatuses is large during daytime and the number of present mobile station apparatuses is small at night. That is, since a transmission state of RA signals is changed according to a time slot, connection quality may be reduced according to a time slot and throughput may be reduced according to a time slot.

An advantage of some aspects of the invention is to provide a wireless communication system capable of ensuring high connection quality and achieving high throughput, a communication apparatus, a wireless communication method and a wireless communication program.

[Means for Solving the Problems]

(1) A wireless communication system comprising a first communication apparatus allocating random access (RA) signals to resources to transmit RA signals, and a second communication apparatus for receiving the RA signals transmitted from the first communication apparatus, wherein the second communication apparatus comprises:a resource allocation configuration candidate storage section that stores in advance a plurality of different resource allocation configurations which are combinations of the resources, the combinations having different sizes; a resource allocation configuration decision section that decides a resource allocation configuration from the plurality of different resource allocation configurations stored in the resource allocation configuration candidate storage section based on a value indicating a receiving frequency of the RA signal; and a resource allocation configuration report section that reports information of the resource allocation configuration decided by the resource allocation configuration decision section, and wherein the first communication apparatus comprises a resource allocation section that allocates the RA signals to the resources of the resource allocation configuration of the information reported from the resource allocation configuration report section of the second communication apparatus.

With such a configuration, since the second communication apparatus decides the resource allocation configuration from the plurality of different resource allocation configurations stored in advance based on the value indicating a receiving frequency of the RA signal, it is possible to avoid collision of generated RA signals when the receiving frequency of the RA signal is high, and to allocate the resources of the resource allocation configuration to other communication when the receiving frequency of the RA signal is low, so that high connection quality can be ensured and high throughput can be achieved.

(2) According to an aspect of the present invention, the resource allocation configuration decision section decides a resource allocation configuration from the resource allocation configurations stored in the resource allocation configuration candidate storage section based on a variation of the value indicating the receiving frequency of the RA signal.

(3) According to an aspect of the present invention, the value indicating the receiving frequency of the RA signal is the number of the first communication apparatus present in a cell which is a communication range of the second communication apparatus.

(4) The value indicating the receiving frequency of the RA signals is a point of time.

(5) According to an aspect of the present invention, The value indicating the receiving frequency of the RA signals is a frequency of detecting the RA signals.

(6) According to an aspect of the present invention, the wireless communication system comprises a plurality of the first communication apparatuses, the plurality of the first communication apparatuses and the second communication apparatus perform a communication of a signal other than the RA signals, and the value indicating the receiving frequency of the RA signal is an amount of communication information between the plurality of the first communication apparatuses and the second communication apparatus, and the amount of communication information including at least an amount of communication information regarding the communication of the signal other than the RA signals.

(7) According to an aspect of the present invention, the value indicating the receiving frequency of the RA signals is an amount of communication information of the RA signals.

(8) According to an aspect of the present invention, there is provided a communication apparatus, which receives random access (RA) signals transmitted by being allocated to preset resources, comprising: a resource allocation configuration candidate storage section that stores in advance a plurality of different resource allocation configurations which are combinations of the resources, the combinations having different sizes; a resource allocation configuration decision section that decides a resource allocation configuration from the plurality of different resource allocation configurations stored in the resource allocation configuration candidate storage section based on a value indicating a receiving frequency of the RA signal; and a resource allocation configuration report section that reports of information of the resource allocation configuration decided by the resource allocation configuration decision section.

(9) According to an aspect of the present invention, there is provided a wireless communication method in a communication apparatus that receives random access (RA) signals transmitted by being allocated to preset resources, comprising: a first process of deciding, by the communication apparatus, a resource allocation configuration from the plurality of different resource allocation configurations, which are combinations of the resources, the combinations having different sizes, based on a value indicating a receiving frequency of the RA signal; and a second process of reporting, by the communication apparatus, of information of the resource allocation configuration decided in the first process.

(10) According to an aspect of the present invention, there is provided a wireless communication program that causes a computer of a communication apparatus, which receives random access (RA) signals transmitted by being allocated to preset resources, to function as: a resource allocation configuration decision means for deciding a resource allocation configuration from the plurality of different resource allocation configurations, which are combinations of the resources, the combinations having different sizes, based on a value indicating a receiving frequency of the RA signal; and a resource allocation configuration report means for reporting of information of the resource allocation configuration decided by the resource allocation configuration decision means.

[Effects of the Invention]

According to the aspect of the present invention, since a base station apparatus decides the resource allocation configuration from the plurality of different resource allocation configurations stored in advance based on the value indicating a receiving frequency of the random access (RA) signal, it is possible to avoid collision of generated RA signals when the receiving frequency of the RA signal is high, and to allocate resources of a resource allocation configuration to other communication when the receiving frequency of the RA signal is low, so that high connection quality can be ensured and high throughput can be achieved.

[Brief Description of the Drawings]

FIG. 1 is a conceptual diagram of a communication system according to a first embodiment of the present invention.
FIG. 2 is a schematic diagram showing an example of an RACH slot configuration table according to the present embodiment.
FIG. 3A is a diagram for explaining an RACH slot configuration table according to the present embodiment.
FIG. 3B is another diagram for explaining an RACH slot configuration table according to the present embodiment.
FIG. 3C is another diagram for explaining an RACH slot configuration table according to the present embodiment.
FIG. 4 is a schematic block diagram showing the configuration of a wireless communication system according to the present embodiment.
FIG. 5 is a flowchart showing one example of the operation of a wireless communication system according to the present embodiment.
FIG. 6 is a schematic block diagram showing the configuration of a wireless communication system according to a second embodiment of the present invention.
FIG. 7 is a flowchart showing one example of the operation of a wireless communication system according to the present embodiment.
FIG. 8 is a schematic block diagram showing the configuration of a wireless communication system according to a third embodiment of the present invention.
FIG. 9 is a diagram for explaining the reception rate of a random access signal according to the present embodiment.
FIG. 10 is a flowchart showing one example of the operation of a wireless communication system according to the present embodiment.
FIG. 11 is a schematic block diagram showing the configuration of a wireless communication system according to a fourth embodiment of the present invention.

FIG. 12 is a flowchart showing one example of the operation of a wireless communication system according to the present embodiment.

FIG. 13 is a schematic block diagram showing the configuration of a wireless communication system according to a fifth embodiment of the present invention.

FIG. 14 is a flowchart showing one example of the operation of a wireless communication system according to the present embodiment.

FIG. 15 is a schematic block diagram showing the configuration of a wireless communication system according to a sixth embodiment of the present invention.

FIG. 16 is a flowchart showing one example of the operation of a wireless communication system according to the present embodiment.

[Best Mode for Carrying out the Invention]

(First Embodiment)

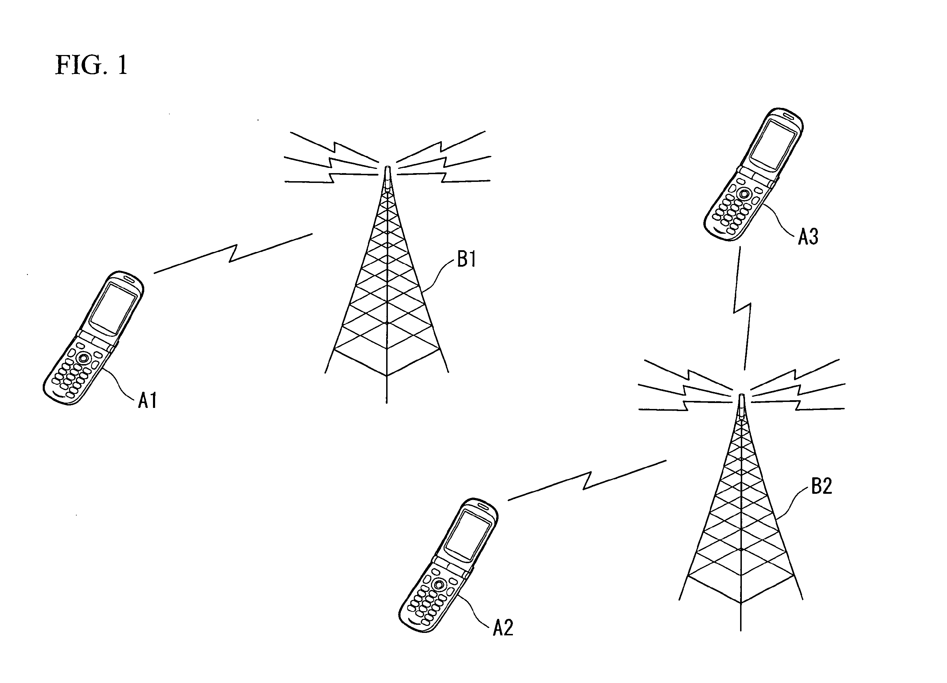

Hereinafter, the first embodiment of the present invention will be described with reference to the accompanying drawings. FIG. 1 is a conceptual diagram of a communication system according to the first embodiment of the present invention.

Referring to FIG. 1, a mobile telephone apparatus A1 (a first communication apparatus) is present in the cell of a base station apparatus B1 (a second communication apparatus) and communicates with the base station apparatus B1. Herein, the cell is a range in which a base station apparatus can communicate with a mobile telephone apparatus, and the term 'present' represents the state where identification information of the mobile telephone apparatus is registered in the base station apparatus through cell search and the like, and the base station apparatus and the registered mobile telephone apparatus can communicate with each other.

Furthermore, a mobile telephone apparatus A2 and a mobile telephone apparatus A3 are present in the cell of a base station apparatus B2 and communicate with the base station apparatus B2. As described above, the base station apparatus may also communicate with a plurality of mobile telephone apparatuses.

In the present embodiment, a downlink from the base station apparatus B1 (B2) to the mobile telephone apparatus A1 (A2 and A3) includes a physical downlink shared channel (PDSCH), a physical broadcast channel (PBCH), a physical multicast channel (PMCH), a physical control format indicator channel (PCFICH), a physical downlink control channel (PDCCH), and a physical hybrid ARQ indicator channel (PHICH).

An uplink from the mobile telephone apparatus A1 (A2 and A3) to the base station apparatus B1 (B2) includes a physical random access channel (PRACH), a physical uplink shared channel (PUSCH), and a physical uplink control channel (PUCCH).

The base station apparatus B1 (B2) is in a state that receives a random access (RA) signal, which is allocated to a random access channel (RACH), from all mobile telephone apparatuses (the mobile telephone apparatus A1 in the case of the base station apparatus B1 and the mobile telephone apparatuses A2 and A3 in the case of the base station apparatus B2) present in the cell of the base station apparatus B1 (B2).

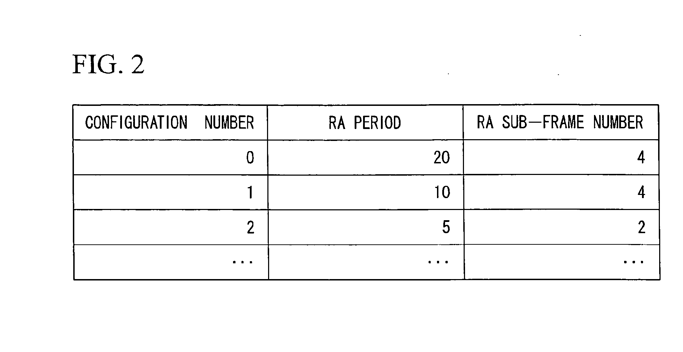

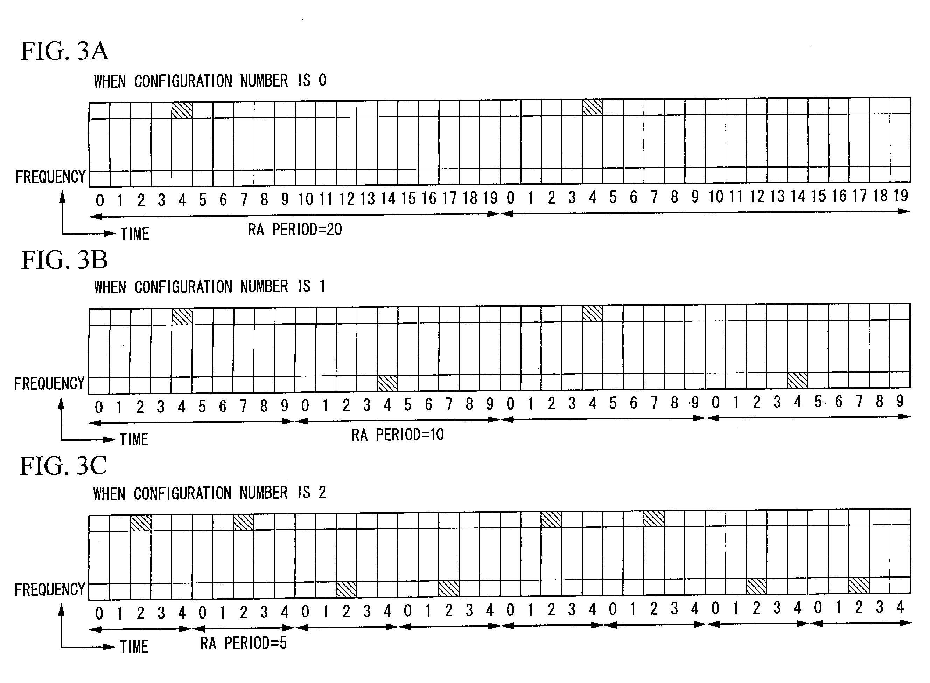

Hereinafter, the RACH according to the present embodiment of the present invention will be described with reference to FIGS. 2, and 3A, 3B and 3C.

FIG. 2 is a schematic diagram showing an example of an RACH slot configuration table according to the present embodiment.

As shown in FIG. 2, the RACH slot configuration table is two-dimensional tabular data including rows and columns, and includes columns of items such as configuration number, RA period, and RA sub-frame number. The main key of the RACH slot configuration table is the configuration number.

The RA period is expressed by the number of sub-frames which are predetermined time intervals, and the RA sub-frame number is obtained by ordering the sub-frames in the RA period as will be described later.

A configuration (RACH slot configuration) obtained by combining resources, to which RA signals represented by data of each row in the RACH slot configuration table can be allocated, will be referred to as an RACH slot configuration (a resource allocation configuration).

FIGS. 3A, 3B and 3C are diagrams for explaining the RACH slot configuration according to the present embodiment.

FIGS. 3A, 3B and 3C show a wireless resource configuration of an uplink, wherein a horizontal axis denotes time and a vertical axis denotes a frequency. Referring to FIGS. 3A, 3B and 3C, a wireless resource is divided into the sub-frames (the predetermined time intervals) in the horizontal axis (the time axis), and RA sub-frame numbers corresponding to the RA period are given. Furthermore, the wireless resource is divided by a predetermined frequency interval in the vertical axis (the frequency axis).

The resource is represented by the wireless resource divided as shown in FIGS. 3A, 3B and 3C, and for example, includes frequency resources divided by time intervals, time resources divided by frequency intervals, and resources divided by the time intervals and the frequency intervals.

Referring to FIGS. 3A, 3B and 3C, hatched resources are resources (hereinafter, referred to as RACH slots) to which RA signals can be allocated.

In addition, for the resources to which the RA signal can be allocated, selection of resources of a frequency domain, for example, are periodically preset.

For example, an RACH slot configuration with a configuration number '0' in FIG. 2 is a configuration shown in FIG. 3A. FIG. 3A shows that sub-frame numbers 0 to 19 are given to the sub-frames of the wireless resource for each RA period '20'. Furthermore, FIG. 3A shows that the RACH slots are resources with the highest frequency of the sub-frame with the RA sub-frame number '4' in the wireless resource.

Similarly, FIG. 3B shows an RACH slot configuration with a configuration number '1' in FIG. 2. FIG. 3B shows that the RACH slots are repeated for each RA period '10', that is, resources with the highest frequency and resources with the lowest frequency of the sub-frames with the RA sub-frame number '4' are repeated.

Furthermore, FIG. 3C shows an RACH slot configuration with a configuration number '2' in FIG. 2. FIG. 3C shows that the RACH slots are repeated for each RA period '5', that is, two resources with the highest frequency and two resources with the lowest frequency of the sub-frames with the RA sub-frame number '2' are repeated.

When comparing FIGS. 3A, 3B and 3C to one another, for example, the number of the RACH slots is 1, 2 and 4 in the 20 sub-frames from the head of FIGS. 3A, 3B and 3C, respectively,

The RACH slot configuration shown in FIG. 3A has a small number of the RACH slots in the unit time as compared with the RACH slot configuration shown in FIG. 3B, that is, the resource is small. Furthermore, the RACH slot configuration shown in FIG. 3C has a large number of the RACH slots in the unit time as compared with the RACH slot configuration shown in FIG. 3B, that is, the resource is large.

That is, the RACH slot configurations shown in the RACH slot configuration table are a plurality of RACH slot configurations in which the numbers of the RACH slots (the size of a resource) in the unit time are different.

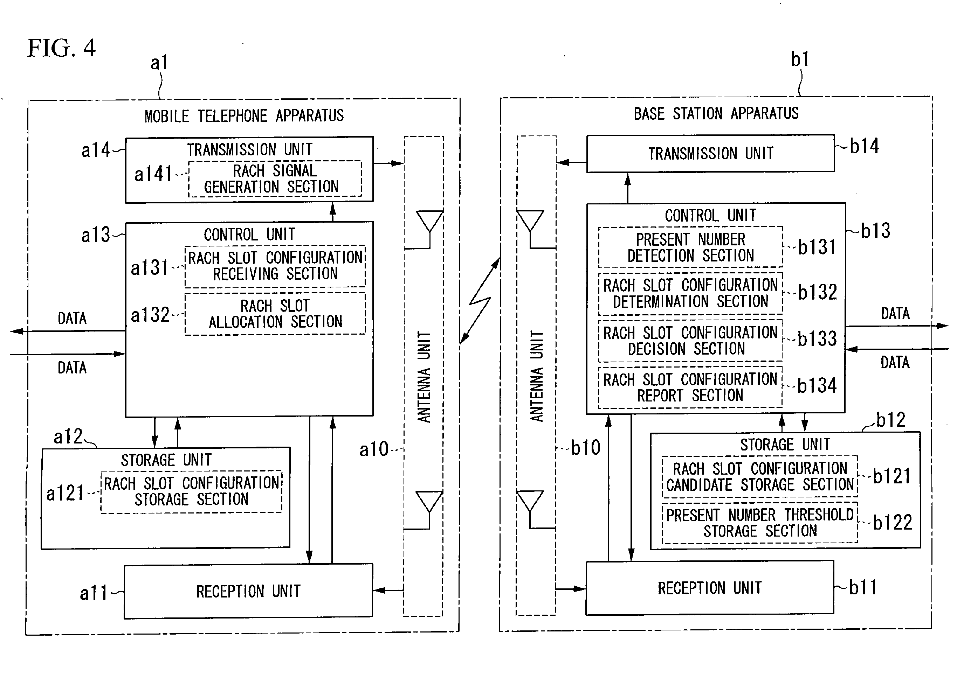

FIG. 4 is a schematic block diagram showing the configuration of the wireless communication system according to the present embodiment. As shown in FIG. 4, the wireless communication system includes a mobile telephone apparatus a1 (which is the mobile telephone apparatus A1 in FIG. 1) and a base station apparatus b1 (which is the base station apparatus B1 in FIG. 1).

First, the base station apparatus b1 will be described.

The base station apparatus b1 includes an antenna unit b10, a reception unit b11, a storage unit b12, a control unit b13, and a transmission unit b14. Furthermore, the base station apparatus b1 has generally known functions of a base station apparatus.

The reception unit b11 down-converts received signals including a RA signal, which is input from a receiving antenna of the antenna unit b10, to baseband signals from wireless frequency signals, and outputs data converted into digital signals through analog/digital conversion to the control unit b13.

The storage unit b12 includes an RACH slot configuration candidate storage section b121 (a resource allocation configuration candidate storage section) and a present number threshold storage section b122.

The RACH slot configuration candidate storage section b121 stores the above-described RACH slot configuration table (FIG. 2). That is, the RACH slot configuration candidate storage section b121 stores in advance a plurality of RACH slot configurations which are a combination of the RACH slots and have different sizes of the combined resources.

The present number threshold storage section b122 stores a threshold $T_H$ of the number X (hereinafter, referred to as the present number X) of mobile telephone apparatuses present in the cell of the base station apparatus b1, which is a value representing the receiving frequency of an RA signal. Furthermore, the present number threshold storage section b122 stores a present number threshold file including information in which the threshold $T_H$ corresponds to the configuration numbers of the RACH slot configurations.

Table 1 below is an example of the present number threshold file stored in the present number threshold storage section b122.

Table 1

| PRESENT NUMBER | CONFIGURATION NUMBER |
|---|---|
| $X \geqq 100$ | 2 |
| $X < 100$ | 1 |

The present number threshold file shown in Table 1 includes items of the present number X and the configuration numbers. For example, the present number threshold file shown in Table 1 represents that the configuration number '1' corresponds to a small present number X which represents a low receiving frequency of the RA signal and is smaller than a threshold 100 (the threshold $T_H$).

Furthermore, the present number threshold file shown in Table 1 represents that the configuration number '2' of the RACH slot configuration, in which the number of the RACH slots in the unit time is large (i.e., the resource is large) as compared with the RACH slot configuration with the configuration number '1', corresponds to a large present number X which represents a high receiving frequency of the RA signal and is equal to or more than the threshold 100.

The control unit b13 controls each element of the base station apparatus b1. Furthermore, the control unit b13 performs data input/output with respect to a communication unit and the like (not shown) of the base station apparatus b1. The control unit b13 includes a present number detection section b131, an RACH slot configuration determination section b132, an RACH slot configuration decision section b133 (a resource allocation configuration decision section), and an RACH slot configuration report section b134 (a resource allocation configuration report section).

The present number detection section b131 detects the present number X. In detail, the present number detection section b131 detects the present number X by detecting the number of mobile telephone apparatuses capable of communicating with the base station apparatus b1, or the number of mobile telephone apparatuses which are communicating with the base station apparatus b1 through cell search and the like.

The RACH slot configuration determination section b132 determines whether the present number X detected by the present number detection section b131 is equal to or more than the threshold $T_H$ stored in the present number threshold storage section b122.

For example, when the threshold $T_H$ is equal to or more than 100, if the present number X detected by the present number detection section b131 is 110, the RACH slot configuration determination section b132 determines that "the present number X is equal to or more than the threshold 100". If the present number X is 90, the RACH slot configuration determination section b132 determines that "the present number X is less than the threshold 100".

The RACH slot configuration decision section b133 decides an RACH slot configuration based on the determination result of the RACH slot configuration determination section b132 and information of the present number threshold file stored in the present number threshold storage section b122.

For example, when the RACH slot configuration determination section b132 determines that "the present number X is equal to or more than the threshold 100", the RACH slot configuration decision section b133 decides an RACH slot configuration as the RACH slot configuration with the configuration number '2' corresponding to the present number X, which is equal to or more than the threshold 100, with reference to Table 1.

That is, the RACH slot configuration decision section b133 decides an RACH slot configuration from the RACH slot configurations stored in the RACH slot configuration candidate storage section b121 based on the present number X (which represents the receiving frequency of the RA signal).

Meanwhile, when the RACH slot configuration determination section b132 determines that "the present number X is smaller than the threshold 100", the RACH slot configuration decision section b133 decides an RACH slot configuration as the RACH slot configuration with the configuration number '1' corresponding to the present number X, which is smaller than the threshold 100, with reference to Table 1.

The RACH slot configuration report section b134 transmits the configuration number of the RACH slot configuration decided by the RACH slot configuration decision section b133 to the mobile telephone apparatus a1 through the transmission unit b14 and the antenna unit b10.

For example, the RACH slot configuration report section b134 reports the configuration number of the RACH slot configuration as downlink report information. The mobile telephone apparatus a1 receives the report information.

Furthermore, the RACH slot configuration report section b134 stores the reported RACH slot configuration (i.e., the configuration number of the RACH slot configuration) in the storage unit b12.

The transmission unit b14 converts data, which is a digital signal input from the control unit b13, into an analog signal through digital/analog conversion, up-converts the analog signal into a wireless frequency signal, and transmits the wireless frequency signal to the mobile telephone apparatus a1 through the transmitting antenna of the antenna unit b10 as a transmission signal.

Next, the mobile telephone apparatus a1 will be described. The mobile telephone apparatus a1 includes an antenna unit a10, a reception unit a11, a storage unit a12, a control unit a13, and a transmission unit a14. Furthermore, the mobile telephone apparatus a1 has generally known functions of a mobile telephone apparatus.

The reception unit a11 down-converts a received signal, which is input from a receiving antenna of the antenna unit a10, to a baseband signal from a wireless frequency signal, and outputs data converted into a digital signal through analog/digital conversion to the control unit a13.

The control unit a13 controls each element of the mobile telephone apparatus a1. Furthermore, the control unit a13 performs conversion between data and a voice signal, and performs input/output of the voice signal with respect to a speaker unit, a microphone unit and the like (not shown) of the mobile telephone apparatus a1.

The control unit a13 includes an RACH slot configuration receiving section a131 and an RACH slot allocation section a132 (a resource allocation section).

The RACH slot configuration receiving section a131 stores the configuration number of the RACH slot configuration, which is reported of from the RACH slot configuration report section b134 of the base station apparatus b1, in the RACH slot configuration storage section a121.

For example, the configuration number of the RACH slot configuration is included in the report information reported of through a downlink, and the RACH slot configuration receiving section a131 receives the configuration number of the RACH slot configuration and stores the configuration number in the RACH slot configuration storage section a121.

The RACH slot allocation section a132 reads the configuration number of the RACH slot configuration stored in the RACH slot configuration storage section a121, and allocates an RA signal to the RACH slot of the RACH slot configuration with the read configuration number.

That is, the RACH slot allocation section a132 allocates the RA signal to an RACH slot of any one of the RACH slot configurations decided by the RACH slot configuration decision section b133 of the base station apparatus b1.

In addition, the mobile telephone apparatus a1 may store in advance an RACH slot configuration table (FIG. 2) including the relationship between the configuration number of the RACH slot configuration and the RACH slot in the storage unit a12 at the time of the manufacturing thereof and the like. Otherwise, the mobile telephone apparatus a1 may report the RACH slot configuration report section b134 of the base station apparatus b1 of the RACH slot configuration table, and store the RACH slot configuration table in the storage unit a12 thereof.

The transmission unit a14 converts data, which is a digital signal input from the control unit a13, into an analog signal through digital/analog conversion, up-converts the analog signal into a wireless frequency signal, and transmits the wireless frequency signal to the base station apparatus b1 through the transmitting antenna of the antenna unit a10 as a transmission signal.

The transmission unit a14 includes an RACH signal generation section a141.

The RACH signal generation section a141 transmits the RA signal to the base station apparatus b1 by using the resource, which is allocated by the RACH slot allocation section a132, through the transmitting antenna of the antenna unit a10.

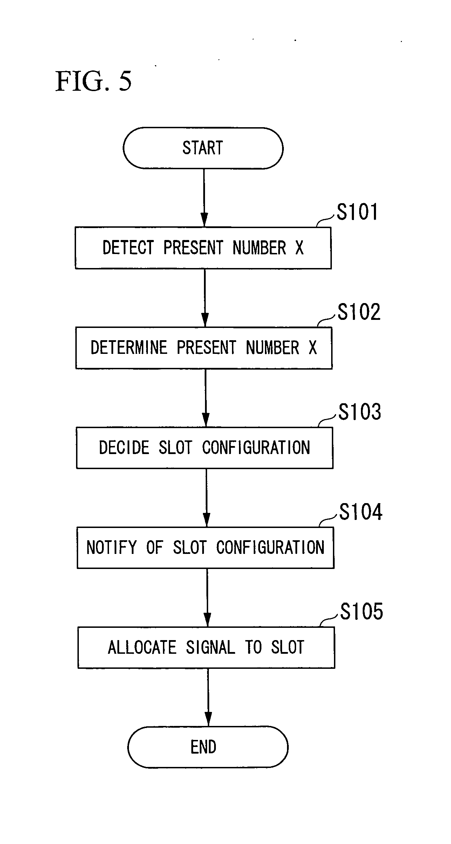

FIG. 5 is a flowchart showing one example of the operation of the wireless communication system according to the present embodiment.

First, the base station apparatus b1 detects the present number X (S101).

Next, the base station apparatus b1 determines whether the present number X detected in S101 is included in the present number of the present number threshold file (S102).

Then, the base station apparatus b1 decides an RACH slot configuration as an RACH slot configuration with a configuration number corresponding to the present number determined in S102 in the present number threshold file (S103).

The base station apparatus b1 reports the mobile telephone apparatus a1 of the configuration number of the RACH slot configuration decided in S103 (S104).

The mobile telephone apparatus a1 allocates an RA signal to the RACH slot of the RACH slot configuration reported of through the process of S104 (S105).

As described above, according to the present embodiment, the base station apparatus b1 compares the number of mobile telephone apparatuses present in its own cell with the threshold $T_H$ stored in advance, and decides an RACH slot configuration based on the comparison result. Furthermore, the mobile telephone apparatus a1 allocates the RA signal to the RACH slot of the RACH slot configuration decided by the base station apparatus b1.

In this way, when the present number is large and the receiving frequency of the RA signal is high, the wireless communication system can prevent collision of generated RA signals by increasing the RACH slots. Meanwhile, when the present number is small and the receiving frequency of the RA signal is low, the wireless communication system can increase resources allocable to other communication by reducing the RACH slots of the RACH slot configuration. Consequently, the wireless communication system can ensure high connection quality, which represents the success rate of connection with each mobile station apparatus, and achieve high throughput.

(Second Embodiment)

Hereinafter, the second embodiment of the present invention will be described with reference to the accompanying drawings.

According to the first embodiment, the wireless communication system decides an RACH slot configuration based on the number of mobile telephone apparatuses present in the cell of a base station apparatus. According to the present embodiment, the wireless communication system decides an RACH slot configuration based on a time slot.

In addition, the conceptual diagram of the communication system is the same as that of FIG. 1 according to the first embodiment.

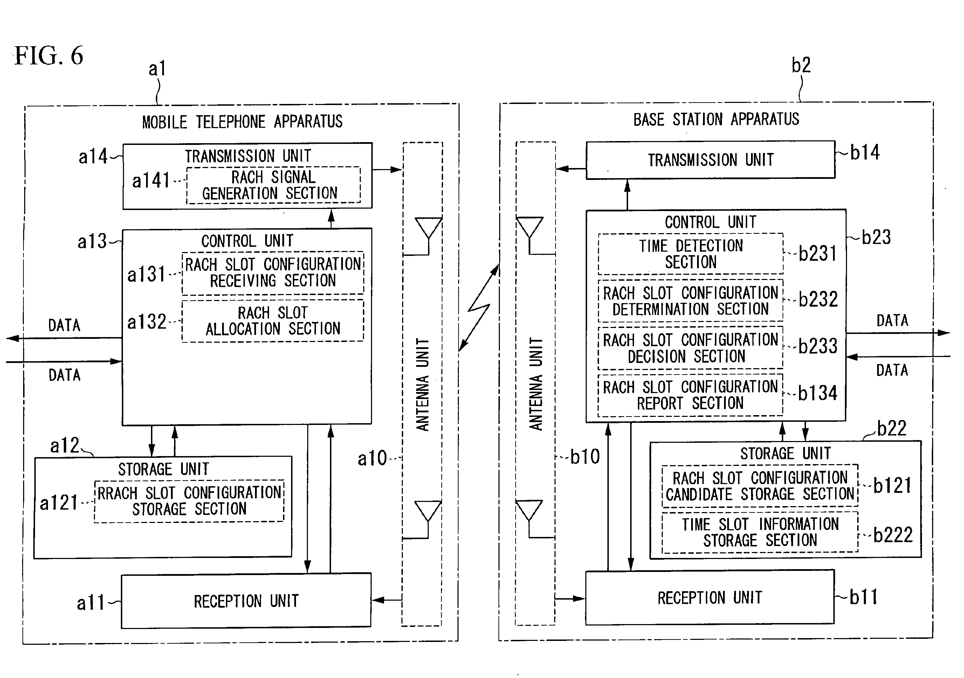

FIG. 6 is a schematic block diagram showing the configuration of the wireless communication system according to the second embodiment of the present invention. As shown in FIG. 6, the wireless communication system includes a mobile telephone apparatus a1 (which is the mobile telephone apparatus A1 in FIG. 1) and a base station apparatus b2 (which is the base station apparatus B1 in FIG. 1).

When comparing the wireless communication system (FIG. 6) according to the present embodiment with the wireless communication system (FIG. 4) according to the first embodiment, since the mobile telephone apparatus a1 has the same function as that of the mobile telephone apparatus a1 according to the first embodiment, detailed description thereof will be omitted.

The base station apparatus b2 will be described.

When comparing the base station apparatus b2 (FIG. 6) according to the present embodiment with the base station apparatus b1 (FIG. 4) according to the first embodiment, a storage unit b22 and a control unit b23 are different from those in the first embodiment. However, since other elements (an antenna unit b10, a reception unit b11, and a transmission unit b14) have the same functions as the antenna unit b10, the reception unit b11, and the transmission unit b14 according to the first embodiment, detailed description thereof will be omitted.

The storage unit b22 includes an RACH slot configuration candidate storage section b121 and a time slot information storage section b222.

Since the RACH slot configuration candidate storage section b121 has the same function as the RACH slot configuration candidate storage section b121 according to the first embodiment, detailed description thereof will be omitted.

The time slot information storage section b222 stores time slots that are values representing the receiving frequency of RA signals, for example, a time slot in which the receiving frequency of an RA signal is high, or a time slot in which the receiving frequency of an RA signal is low. Furthermore, the time slot information storage section b222 stores a time slot information file including information in which time slots correspond to configuration numbers of RACH slot configurations.

Table 2 below is an example of the time slot information file stored in the time slot information storage section b222.

Table 2

| TIME SLOT | CONFIGURATION NUMBER |
|---|---|
| 6：00～11：00 | 1 |
| 11：00～14：00 | 2 |
| 14：00～17：00 | 1 |
| 17：00～23：00 | 2 |
| 23：00～6：00 | 0 |

The time slot information file shown in Table 2 includes items of the time slots and the configuration numbers. For example, the time slot information file shown in Table 2 represents that the configuration number '1' corresponds to time slots "6:00 to 11:00" and "14:00 to 17:00".

Furthermore, the time slot information file shown in Table 2 represents that the configuration number '2' of the RACH slot configuration, in which the number of the RACH slots in the unit time is large (i.e., the resource is large) as compared with the RACH slot configuration with the configuration number '1', corresponds to a time slot $T_1$ "11:00 to 14:00" and a time slot $T_2$ "17:00 to 23:00" in which traffic is generally large, that is, the receiving frequency of an RA signal is high. Moreover, the time slot information file shown in Table 2 represents that the configuration number '0' of the RACH slot configuration, in which the number of the RACH slots in the unit time is small (i.e., the resource is small) as compared with the RACH slot configuration with the configuration number '1', corresponds to a time slot $T_3$ "23:00 to 6:00" in which traffic is generally small, that is, the receiving frequency of an RA signal is low.

The control unit b23 controls each element of the base station apparatus b2. Furthermore, the control unit b23 performs data input/output with respect to a communication unit and the like (not shown) of the base station apparatus b2. The control unit b23 includes a time detection section b231, an RACH slot configuration determination section b232, an RACH slot configuration decision section b233 (a resource allocation configuration decision section), and an RACH slot configuration report section b134.

Since the RACH slot configuration report section b134 has the same function as the RACH slot configuration report section b134 according to the first embodiment, detailed description thereof will be omitted.

The time detection section b231 has a clock function to detect a current time T.

The RACH slot configuration determination section b232 determines the time slot including the current time T detected by the time detection section b231 from time slots stored in the time slot information storage section b222.

For example, when the current time T detected by the time detection section b231 is 11:05, the RACH slot configuration determination section b232 determines that "the current time T is included in the time slot $T_1$".

The RACH slot configuration decision section b233 decides an RACH slot configuration based on the determination result of the RACH slot configuration determination section b232 and the information of the time slot information file stored in the time slot information storage section b222.

For example, when the RACH slot configuration determination section b232 determines that "the current time $T$ is included in the time slot $T_1$," the RACH slot configuration decision section b233 decides an RACH slot configuration as the RACH slot configuration with the configuration number '2' corresponding to the time slot $T_1$ "11:00 to 14:00 " with reference to Table 2.

Furthermore, when the RACH slot configuration determination section b232 determines that "the current time T is included in the time slot $T_3$," the RACH slot configuration decision section b233 decides an RACH slot configuration as the RACH slot configuration with the configuration number '0'.

That is, the RACH slot configuration decision section b233 decides an RACH slot configuration from the RACH slot configurations stored in the RACH slot configuration candidate storage section b121 based on the time slot (which is the value representing the receiving frequency of the RA signal).

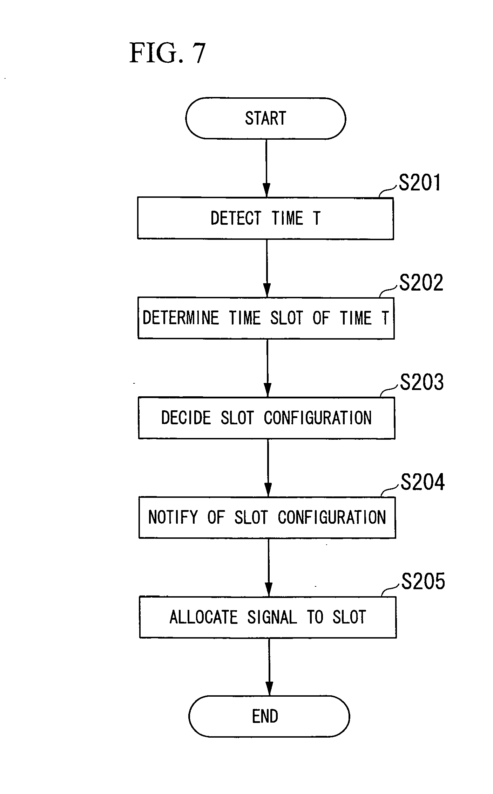

FIG. 7 is a flowchart showing one example of the operation of the wireless communication system according to the present embodiment.

First, the base station apparatus b2 detects the current time T (S201).

Next, the base station apparatus b2 determines the time slot including the current time T detected in S201 from the time slot information file (S202).

Then, the base station apparatus b2 decides an RACH slot configuration as the RACH slot configuration with the configuration number corresponding to the time slot determined in S202 in the time slot information file (S203).

The base station apparatus b2 reports the mobile telephone apparatus a1 of the RACH slot configuration determined in S203 (S204).

The mobile telephone apparatus a1 allocates an RA signal to the RACH slot of the RACH slot configuration reported of through the process of S204 (S205).

As described above, according to the present embodiment, the base station apparatus b2 compares the current time with the time slot stored in advance, and decides an RACH slot configuration based on the comparison result. Furthermore, the mobile telephone apparatus a1 allocates the RA signal to the RACH slot of the RACH slot configuration decided by the base station apparatus b2.

In this way, in a time slot in which the traffic is large and the receiving frequency of the RA signal is high, the wireless communication system can prevent collision of generated RA signals by increasing the RACH slots. Meanwhile, in a time slot in which the traffic is small and the receiving frequency of the RA signal is low, the wireless communication system can increase resources allocable to other communication by reducing the RACH slots of the RACH slot configuration. Consequently, the wireless communication system can ensure high connection quality and achieve high throughput.

(Third Embodiment)

Hereinafter, the third embodiment of the present invention will be described with reference to the accompanying drawings.

According to the first embodiment, the wireless communication system decides an RACH slot configuration based on the number of mobile telephone apparatuses present in the cell of a base station apparatus. According to the present embodiment, the wireless communication system decides an RACH slot configuration based on a reception rate of RA signals. In addition, the conceptual diagram of the communication system is the same as that of FIG. 1 according to the first embodiment.

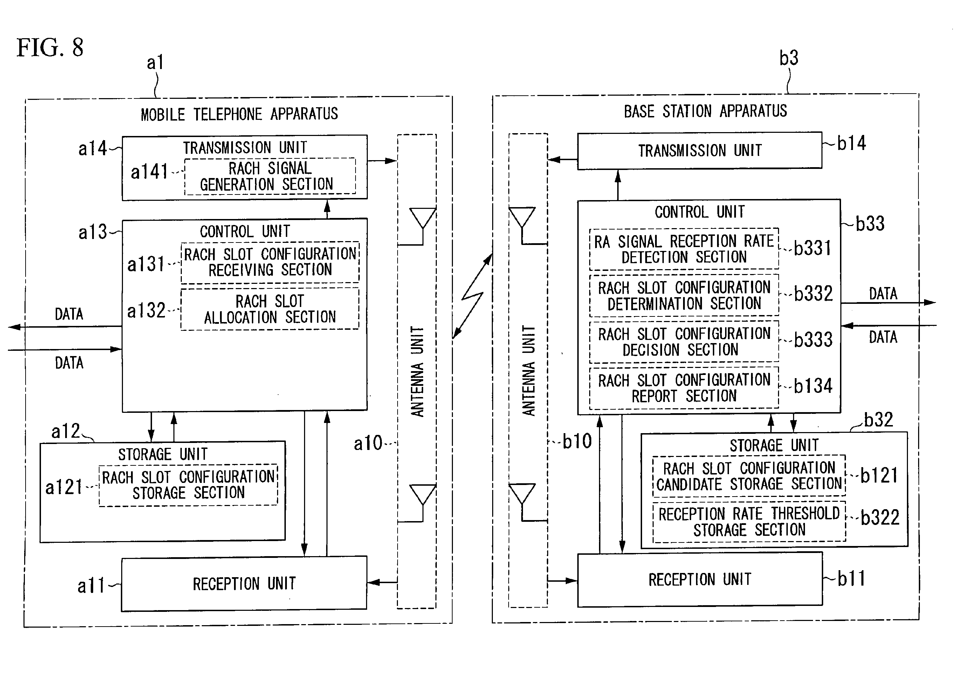

FIG. 8 is a schematic block diagram showing the configuration of the wireless communication system according to the third embodiment of the present invention. As shown in FIG. 8, the wireless communication system includes a mobile telephone apparatus a1 (which is the mobile telephone apparatus A1 in FIG. 1) and a base station apparatus b3 (which is the base station apparatus B1 in FIG. 1).

When comparing the wireless communication system (FIG. 8) according to the present embodiment with the wireless communication system (FIG. 4) according to the first embodiment, since the mobile telephone apparatus a1 has the same function as the mobile telephone apparatus a1 according to the first embodiment, detailed description thereof will be omitted.

The base station apparatus b3 will be described.

When comparing the base station apparatus b3 (FIG. 8) according to the present embodiment with the base station apparatus b1 (FIG. 4) according to the first embodiment, a storage unit b32 and a control unit b33 are different from those in the first embodiment. However, since other elements (an antenna unit b10, a reception unit b11, and a transmission unit b14) have the same functions as the antenna unit b10, the reception unit b11, and the transmission unit b14 according to the first embodiment, detailed description thereof will be omitted.

The storage unit b32 includes an RACH slot configuration candidate storage section b121 and a reception rate threshold storage section b322.
Since the RACH slot configuration candidate storage section b121 has the same function as the RACH slot configuration candidate storage section b121 according to the first embodiment, detailed description thereof will be omitted.

The reception rate threshold storage section b322 stores a threshold $T_H$ of a reception rate $P_1$ (hereinafter, referred to as reception rate $P_1$) of an RA signal, which is a value representing the receiving frequency of the RA signal and represents a detection frequency of the RA signal. For example, the reception rate threshold storage section b322 stores the threshold $T_H$ for determining whether the receiving frequency of the RA signal is high or low.
In addition, as will be described later, as the reception rate $P_1$ rises, the receiving frequency of the RA signal rises. As the reception rate $P_1$ falls, the receiving frequency of the RA signal falls.
For example, the reception rate threshold storage section b322 stores the threshold 70%($T_H$) which is a high reception rate $P_1$ indicating that the receiving frequency of the RA signal is high.

Meanwhile, the reception rate threshold storage section b322 may store the threshold $T_H$ of a low reception rate $P_1$ indicating that the receiving frequency of the RA signal is low. In addition, the threshold indicating that the receiving frequency of the RA signal is high may be equal to or different from the threshold indicating that the receiving frequency of the RA signal is low.

The control unit b33 controls each element of the base station apparatus b3. Furthermore, the control unit b33 performs data input/output with respect to a communication unit and the like (not shown) of the base station apparatus b3. The control unit b33 includes an RA signal reception rate detection section b331, an RACH slot configuration determination section b332, an RACH slot configuration decision section b333, and an RACH slot configuration report section b134.
Since the RACH slot configuration report section b134 has the same function as the RACH slot configuration report section b134 according to the first embodiment, detailed description thereof will be omitted.

The RA signal reception rate detection section b331 detects an RA signal allocated to a preset resource (an RACH slot), to which the RA signal can be allocated, from the resource, and calculates the reception rate $P_1$.

For example, first, the RA signal reception rate detection section b331 detects the power of the RA signal allocated to the RACH slot.
Next, when the detected power of the RA signal exceeds a preset power threshold $E_1$, the RA signal reception rate detection section b331 determines that the RA signal has been detected and increases the number $N_d$ of detections by 1. Meanwhile, when the detected power of the RA signal exceeds another preset power threshold $E_2$ but does not exceed the threshold $E_1$, the RA signal reception rate detection section b331 determines that the RA signal has not been detected and increases the number $N_m$ of non-detections by 1.
That is, noise in which the power detected by the RA signal reception rate detection section b331 is smaller the threshold $E_2$, that is, signals other than the RA signal, and the like are excluded from objects from which the reception rate of the RA signal is to be calculated.

The RA signal reception rate detection section b331 calculates the reception rate $P_1$ by using the number $N_d$ (the detection frequency of the RA signal) of detections, which is detected at a monitoring time t (e.g., 10 minutes) and the number $N_m$ of non-detections as expressed by Equation 1 below.

$$\text{Equation 1}$$

$$P_1 = 100 \times N_d / ( N_d + N_m )$$

When the receiving frequency of the RA signal is low and the number $N_d$ of detections of the RA signal is small (the number $N_m$ of non-detections is large), the reception rate $P_1$ has a low value. In such a case, in relation to the detected RA signal, since the RA signals from a plurality of the mobile telephone apparatuses a1 are allocated to the same resource, it is highly probable that they will collide and interfere with one another. Meanwhile, when the receiving frequency of the RA signal is high and the number $N_d$ of detections of the RA signal is large (the number $N_m$ of non-detections is small), the reception rate $P_1$ has a high value. In such a case, in relation to the detected RA signal, since the RA signals from a plurality of the mobile telephone apparatuses a1 are allocated to different resources, there is little probability that they will collide and interfere with one another.

The RACH slot configuration determination section b332 determines whether the reception rate $P_1$ detected by the RA signal reception rate detection section b331 is equal to or more than the threshold $T_H$ stored in the reception rate threshold storage section b322.
For example, when the threshold $T_H$ is 70%, if the reception rate $P_1$ detected by the RA signal reception rate detection section b331 is 74%, the RACH slot configuration determination section b332 determines that "the reception rate $P_1$ is equal to or more than the threshold 70%". If the reception rate $P_1$ is 68%, the RACH slot configuration determination section b332 determines that "the reception rate $P_1$ is smaller than the threshold 70%".

When the reception rate $P_1$ has exceeded the threshold $T_H$, that is, when the determination result of the RACH slot configuration determination section b332 has changed, the RACH slot configuration decision section b333 decides an RACH slot configuration to which the mobile telephone apparatus a1 can allocate an RA signal.

Furthermore, the RACH slot configuration decision section b333 reads the configuration number of an RACH slot configuration, which is used when the mobile telephone apparatus a1 currently allocates the RA signal, from the storage unit b32. In addition, the configuration number read from the storage unit b32 is the configuration number stored in the storage unit b32 when the RACH slot configuration report section b134 reports the mobile telephone apparatus a1 of the RACH slot configuration.

In detail, when the determination result of the RACH slot configuration determination section b332 has changed and the reception rate $P_1$ exceeds the threshold $T_H$, which indicates that the receiving frequency is high, the RACH slot configuration decision section b333 decides an RACH slot configuration as an RACH slot configuration with a configuration number having a resource smaller than that of the RACH slot configuration used when the mobile telephone apparatus a1 currently allocates the RA signal.

For example, if the reception rate $P_1$ previously detected by the RA signal reception rate detection section b331 is 68%, the RACH slot configuration determination section b332 determines that "the reception rate $P_1$ is smaller than the threshold 70%". If the reception rate $P_1$ detected by the RA signal reception rate detection section b331 this time is 74%, the RACH slot configuration determination section b332 determines that "the reception rate $P_1$ is equal to or more than the threshold 70%". At this time, the RACH slot configuration decision section b333 decides that the determination result of the RACH slot configuration determination section b332 has changed and the reception rate $P_1$ exceeds the threshold 70%, which indicates that the receiving frequency is high.

In such a case, for example, when the configuration number of the RACH slot configuration used when the mobile telephone apparatus a1 currently allocates the RA signal is the configuration number '1' in FIG. 2, the RACH slot configuration decision section b333 decides an RACH slot configuration as the RACH slot configuration with the configuration number '0', which has a small number of RACH slots in the unit time as compared with the RACH slot configuration with the configuration number '1' and has a resource smaller than that of the configuration number.

That is, the RACH slot configuration decision section b333 decides the RACH slot configuration from the RACH slot configurations stored in the RACH slot configuration candidate storage section b121 based on the reception rate $P_1$ (which is a value representing the receiving frequency of the RA signal).

Meanwhile, when the determination result of the RACH slot configuration determination section b332 has changed and the reception rate $P_1$ becomes lower than the threshold $T_H$, which indicates that the receiving frequency is low, the RACH slot configuration decision section b333 may also decide the RACH slot configuration as an RACH slot configuration with a configuration number having a resource larger than that of the RACH slot configuration used when the mobile telephone apparatus a1 currently allocates the RA signal.

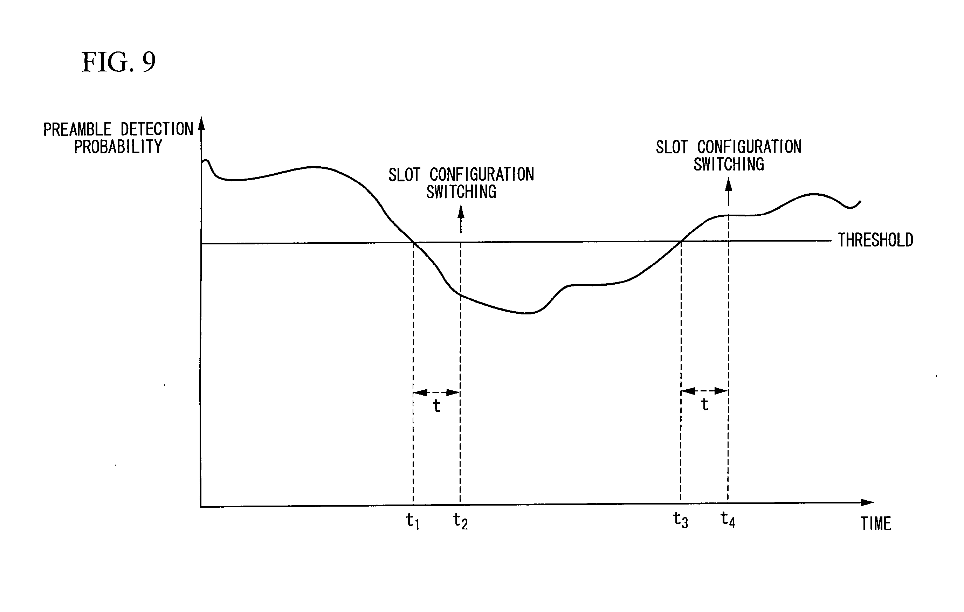

FIG. 9 is a diagram for explaining the reception rate of the RA signal according to the present embodiment. In FIG. 9, a horizontal axis denotes time and a vertical axis denotes the reception rate of the RA signal. Furthermore, the time interval t (e.g., 10 minutes) is the monitoring time t, and the RA signal reception rate detection section b331 detects the reception rate $P_1$ at times $t_1$ to $t_4$.

In FIG. 9, the RACH slot configuration determination section b332 determines that "the reception rate $P_1$ is equal to or more than the threshold $T_H$ up to the time $t_1$". At the time $t_2$, the RACH slot configuration determination section b332 determines that "the reception rate $P_1$ is smaller than the threshold $T_H$". In such a case, when the determination result of the RACH slot configuration determination section b332 has changed at the time $t_2$, for example, when the threshold $T_H$ indicates that the receiving frequency is low, the RACH slot configuration decision section b333 decides the RACH slot configuration as an RACH slot configuration with a configuration number having a resource larger than that of the RACH slot configuration used when the mobile telephone apparatus a1 currently allocates the RA signal.

Furthermore, in FIG. 9, from the time $t_2$ to the time $t_3$, the RACH slot configuration determination section b332 determines that "the reception rate $P_1$ is smaller than the threshold $T_H$". At the time $t_4$, the RACH slot configuration determination section b332 determines that "the reception rate $P_1$ is equal to or more than the threshold $T_H$". In such a case, when the determination result of the RACH slot configuration determination section b332 has changed at the time $t_4$, for example, when the threshold $T_H$ indicates that the receiving frequency is high, the RACH slot configuration decision section b333 decides the RACH slot configuration as an RACH slot configuration with a configuration number having a resource smaller than that of the RACH slot configuration used when the mobile telephone apparatus a1 currently allocates the RA signal.

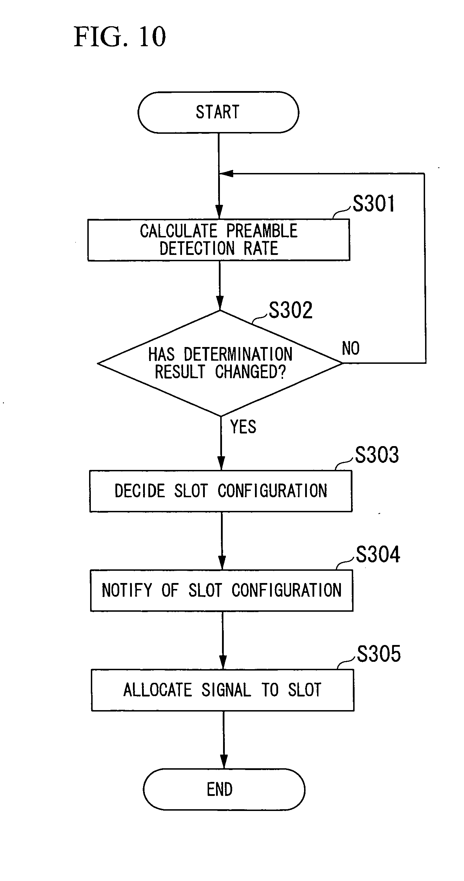

FIG. 10 is a flowchart showing one example of the operation of the wireless communication system according to the present embodiment.

First, the base station apparatus b3 detects an RA signal and calculates the reception rate $P_1$ of the RA signal (S301). Next, the base station apparatus b3 determines whether the determination result of the RACH slot configuration determination section b332 has changed with respect to the reception rate $P_1$ of the RA signal calculated in S301 (S302).

When it is determined that the determination result of the RACH slot configuration determination section b332 has changed in S302, the base station apparatus b3 proceeds to the process of S303.

Meanwhile, when it is determined that the determination result of the RACH slot configuration determination section b332 has not changed in S302, the base station apparatus b3 proceeds to the process of S301.

The base station apparatus b3 decides an RACH slot configuration (S303). In detail, when the determination result of the RACH slot configuration determination section b332 has changed and the reception rate $P_1$ exceeds the threshold $T_H$, which indicates that the receiving frequency is high, the base station apparatus b3 decides an RACH slot configuration as the RACH slot configuration with a configuration number having a small number of RACH slots in the unit time, that is, has a small resource as compared with the RACH slot configuration used when the mobile telephone apparatus a1 currently allocates the RA signal. Meanwhile, when the determination result of the RACH slot configuration determination section b332 has changed and the reception rate $P_1$ becomes lower than the threshold $T_H$, which indicates that the receiving frequency is low, the base station apparatus b3 decides an RACH slot configuration as the RACH slot configuration with a configuration number having a large number of RACH slots in the unit time, that is, has a large resource as compared with the RACH slot configuration used when the mobile telephone apparatus a1 currently allocates the RA signal.

The base station apparatus b3 reports the mobile telephone apparatus a1 of the RACH slot configuration decided through the process of S303 (S304).

The mobile telephone apparatus a1 allocates an RA signal to the RACH slot of the RACH slot configuration reported of through the process of S304 (S305).

As described above, according to the present embodiment, the base station apparatus b3 compares the reception rate of the RA signal with the threshold $T_H$ stored in advance, and decides an RACH slot configuration based on the comparison result. Furthermore, the mobile telephone apparatus a1 allocates the RA signal to the RACH slot of the RACH slot configuration decided by the base station apparatus b3.

In this way, when the reception rate $P_1$ is low and the receiving frequency of the RA signal is low, the wireless communication system can prevent collision of generated RA signals by increasing the RACH slots. Meanwhile, when the reception rate $P_1$ is high and the receiving frequency of the RA signal is high, the wireless communication system can increase resources allocable to other communication by reducing the RACH slots of the RACH slot configuration. Consequently, the wireless communication system can ensure high connection quality and achieve high throughput.

(Fourth Embodiment)

Hereinafter, the fourth embodiment of the present invention will be described with reference to the accompanying drawings.

According to the first embodiment, the wireless communication system decides an RACH slot configuration based on the number of mobile telephone apparatuses present in the cell of a base station apparatus. According to the present embodiment, the wireless communication system decides an RACH slot configuration based on the sum (hereinafter, referred to as the total traffic amount) of the communication traffic amount between a base station apparatus and mobile telephone apparatuses present in the cell of the base station apparatus.

In addition, the conceptual diagram of the communication system is the same as that of FIG. 1 according to the first embodiment.

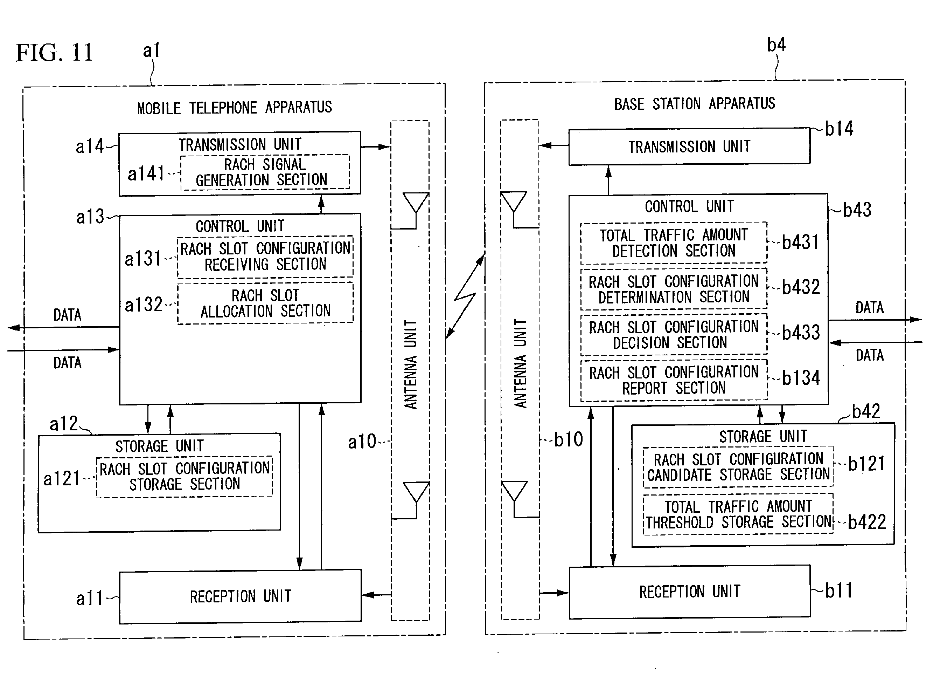

FIG. 11 is a schematic block diagram showing the configuration of the wireless communication system according to the fourth embodiment of the present invention. As shown in FIG. 11, the wireless communication system includes a mobile telephone apparatus a1 (which is the mobile telephone apparatuses A2 and A3 in FIG. 1) and a base station apparatus b4 (which is the base station apparatus B2 in FIG. 1).

According to the present embodiment, the mobile telephone apparatuses A2 and A3 and the base station apparatus B2 perform communication not based on an RA signal, for example, communication of data necessary for communication of a telephone function, data of E-mail and the like.

Furthermore, when comparing the wireless communication system (FIG. 11) according to the present embodiment with the wireless communication system (FIG. 4) according to the first embodiment, since the mobile telephone apparatus a1 has the same function as the mobile telephone apparatus a1 according to the first embodiment, detailed description thereof will be omitted.

The base station apparatus b4 will be described.

When comparing the base station apparatus b4 (FIG. 11) according to the present embodiment with the base station apparatus b1 (FIG. 4) according to the first embodiment, a storage unit b42 and a control unit b43 are different from those in the first embodiment. However, since other elements (an antenna unit b10, a reception unit b11, and a transmission unit b14) have the same functions as the antenna unit b10, the reception unit b11, and the transmission unit b14 according to the first embodiment, detailed description thereof will be omitted.

The storage unit b42 includes an RACH slot configuration candidate storage section b121 and a total traffic amount threshold storage section b422.

Since the RACH slot configuration candidate storage section b121 has the same function as the RACH slot configuration candidate storage section b121 according to the first embodiment, detailed description thereof will be omitted.

The total traffic amount threshold storage section b422 stores a threshold $T_H$ which is compared with the total traffic amount Y which is the sum of the amount of communication information between the base station apparatus b4 and each mobile telephone apparatus and is a value representing the receiving frequency of the RA signal.

The control unit b43 controls each element of the base station apparatus b4. Furthermore, the control unit b43 performs data input/output with respect to a communication unit and the like (not shown) of the base station apparatus b4. The control unit b43 includes a total traffic amount detection section b431, an RACH slot configuration determination section b432, an RACH slot configuration decision section b433, and an RACH slot configuration report section b134. Since the RACH slot configuration report section b134 has the same function as the RACH slot configuration report section b134 according to the first embodiment, detailed description thereof will be omitted.

The total traffic amount detection section b431 detects the amount of information transmitted from the transmission unit b14 and the amount of information received in the reception unit b11 in a predetermined time, and calculates the total traffic amount Y which is the sum of the amount of the detected information.

The RACH slot configuration determination section b432 determines whether the total traffic amount Y detected by the total traffic amount detection section b431 is equal to or more than the threshold $T_H$ stored in the total traffic amount threshold storage section b422.

For example, when the threshold $T_H$ is 50 Mbytes, if the total traffic amount Y detected by the total traffic amount detection section b431 is 40 Mbytes, the RACH slot configuration determination section b432 determines that "the total traffic amount Y is smaller than the threshold 50 Mbytes". If the total traffic amount Y is 60 Mbytes, the RACH slot configuration determination section b432 determines that "the total traffic amount Y is equal to or more than the threshold 50 Mbytes".

When the total traffic amount Y has crossed the threshold $T_H$, that is, when the determination result of the RACH slot configuration determination section b432 has changed, the RACH slot configuration decision section b433 decides an RACH slot configuration to which the mobile telephone apparatus a1 can allocate an RA signal. Furthermore, the RACH slot configuration decision section b433 reads an RACH slot configuration, which is used when the mobile telephone apparatus a1 currently allocates the RA signal, from the storage unit b42.

In detail, when the determination result of the RACH slot configuration determination section b432 has changed and the total traffic amount Y exceeds the threshold $T_H$, the RACH slot configuration decision section b433 decides an RACH slot configuration as an RACH slot configuration with a configuration number having a resource larger than that of the RACH slot configuration used when the mobile telephone apparatus a1 currently allocates the RA signal.

For example, when the total traffic amount Y previously detected by the total traffic amount detection section b431 is 40 Mbytes, the RACH slot configuration determination section b432 determines that "the total traffic amount Y is smaller than the threshold 50 Mbytes". When the total traffic amount Y detected by the total traffic amount detection section b431 this time is 60 Mbytes, the RACH slot configuration determination section b432 determines that "the total traffic amount Y is equal to or more than the threshold 50 Mbytes".

At this time, the RACH slot configuration decision section b433 decides that the determination result of the RACH slot configuration determination section b432 has changed and the total traffic amount Y exceeds the threshold 50 Mbytes.

At this time, for example, when the configuration number of the RACH slot configuration used when the mobile telephone apparatus a1 currently allocates the RA signal is the configuration number '1' in FIG. 2, the RACH slot configuration decision section b433 decides an RACH slot configuration as the RACH slot configuration with the configuration number '2', which has a large number of RACH slots in the unit time as compared with the RACH slot configuration with the configuration number '1' and has a resource larger than that of the configuration number.

That is, the RACH slot configuration decision section b433 decides the RACH slot configuration from the RACH slot configurations stored in the RACH slot configuration candidate storage section b121 based on the total traffic amount Y (which is the value representing the receiving frequency of the RA signal).

Meanwhile, when the determination result of the RACH slot configuration determination section b432 has changed and the total traffic amount Y becomes lower than the threshold 50 Mbytes, the RACH slot configuration decision section b433 may also decide the RACH slot configuration as an RACH slot configuration with a configuration number having a resource smaller than that of the RACH slot configuration used when the mobile telephone apparatus a1 currently allocates the RA signal.

For example, when the total traffic amount Y previously detected by the total traffic amount detection section b431 is 60 Mbytes, the RACH slot configuration determination section b432 determines that "the total traffic amount Y is equal to or more than the threshold 50 Mbytes". When the total traffic amount Y detected by the total traffic amount detection section b431 this time is 40 Mbytes, the RACH slot configuration determination section b432 determines that "the total traffic amount Y is smaller than the threshold 50 Mbytes".

At this time, the RACH slot configuration decision section b433 decides that the determination result of the RACH slot configuration determination section b432 has changed and the total traffic amount Y crosses below the threshold 50 Mbytes.

At this time, for example, when the configuration number of the RACH slot configuration used when the mobile telephone apparatus a1 currently allocates the RA signal is the configuration number '1' in FIG. 2, the RACH slot configuration decision section b433 may also decide an RACH slot configuration as the RACH slot configuration with the configuration number '0', which has a small number of RACH slots in the unit time as compared with the RACH slot configuration with the configuration number '1' and has a resource smaller than that of the configuration number.

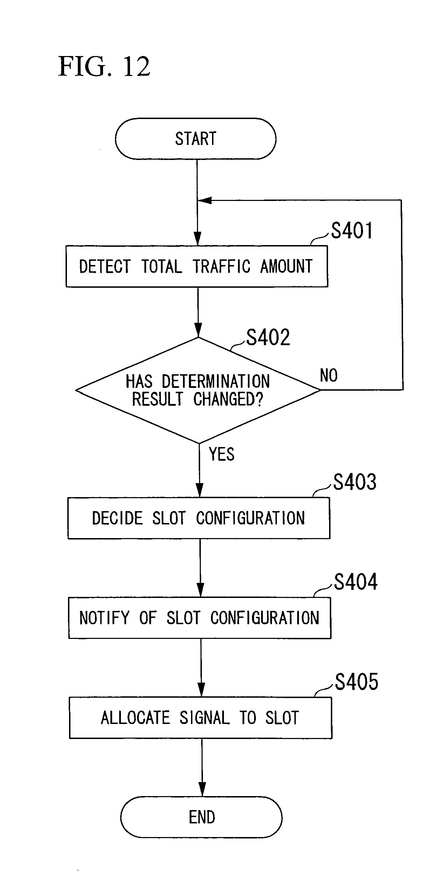

FIG. 12 is a flowchart showing one example of the operation of the wireless communication system according to the present embodiment.

First, the base station apparatus b4 calculates the total traffic amount Y (S401).

Next, the base station apparatus b4 determines whether the determination result of the RACH slot configuration determination section b432 has changed with respect to the total traffic amount Y calculated in S401 (S402).

When it is determined that the determination result of the RACH slot configuration determination section b432 has changed in S402, the base station apparatus b4 proceeds to the process of S403.

Meanwhile, when it is determined that the determination result of the RACH slot configuration determination section b432 has not changed in S402, the base station apparatus b4 proceeds to the process of S401.

The base station apparatus b4 decides an RACH slot configuration (S403). In detail, when the determination result of the RACH slot configuration determination section b432 has changed and the total traffic amount Y exceeds the threshold $T_H$, the base station apparatus b4 decides an RACH slot configuration as an RACH slot configuration which has a large number of RACH slots in the unit time, that is, has a large resource as compared with the current RACH slot configuration. Meanwhile, when the determination result of the RACH slot configuration determination section b432 has changed and the total traffic amount Y becomes lower than the threshold $T_H$, the base station apparatus b4 decides an RACH slot configuration as an RACH slot configuration which has a small number of RACH slots in the unit time, that is, has a small resource as compared with the current RACH slot configuration.

The base station apparatus b4 reports the mobile telephone apparatus a1 of the RACH slot configuration decided through the process of S403 (S404).

The mobile telephone apparatus a1 allocates an RA signal to the RACH slot of the RACH slot configuration reported of through the process of S404 (S405).

As described above, according to the present embodiment, the base station apparatus b4 compares the total traffic amount Y with the threshold $T_H$ stored in advance, and decides an RACH slot configuration based on the comparison result. Furthermore, the mobile telephone apparatus a1 allocates the RA signal to the RACH slot of the RACH slot configuration decided by the base station apparatus b4.

In this way, when the total traffic amount Y is large and the receiving frequency of the RA signal is high, the wireless communication system can prevent collision of generated RA signals by increasing the RACH slots. Meanwhile, when the total traffic amount Y is small and the receiving frequency of the RA signal is low, the wireless communication system can increase resources allocable to other communication by reducing the RACH slots of the RACH slot configuration. Consequently, the wireless communication system can ensure high connection quality and achieve high throughput.

(Fifth Embodiment)

Hereinafter, the fifth embodiment of the present invention will be described with reference to the accompanying drawings.

According to the fourth embodiment, the wireless communication system decides an RACH slot configuration based on the sum (hereinafter, referred to as the total traffic amount) of the amount of communication traffic between a base station apparatus and mobile telephone apparatuses present in the cell of the base station apparatus.

According to the present embodiment, the wireless communication system decides an RACH slot configuration based on the total amount of received information of an RA signal.

In addition, the conceptual diagram of the communication system is the same as that of FIG. 1 according to the first embodiment.

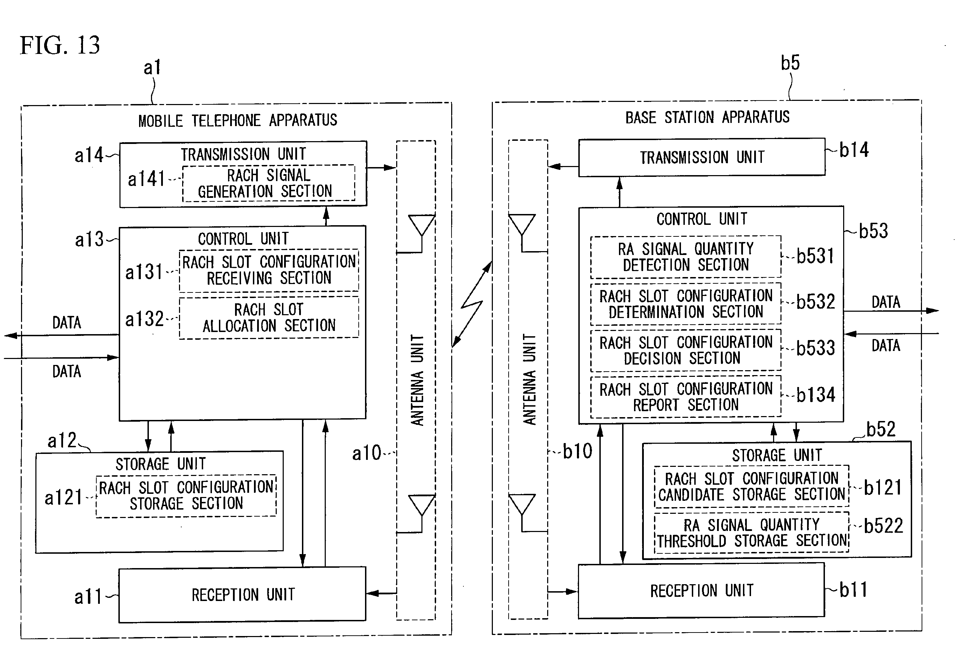

FIG. 13 is a schematic block diagram showing the configuration of the wireless communication system according to the fifth embodiment of the present invention. As shown in FIG. 13, the wireless communication system includes a mobile telephone apparatus a1 (which is the mobile telephone apparatuses A2 and A3 in FIG. 1) and a base station apparatus b5 (which is the base station apparatus B2 in FIG. 1).

Furthermore, when comparing the wireless communication system (FIG. 13) according to the present embodiment with the wireless communication system (FIG. 4) according to the first embodiment, since the mobile telephone apparatus a1 has the same function as the mobile telephone apparatus a1 according to the first embodiment, detailed description thereof will be omitted.

The base station apparatus b5 will be described.

When comparing the base station apparatus b5 (FIG. 13) according to the fifth embodiment with the base station apparatus b1 (FIG. 4) according to the first embodiment, a storage unit b52 and a control unit b53 are different from those in the first embodiment. However, since other elements (an antenna unit b10, a reception unit b11, and a transmission unit b14) have the same functions as the antenna unit b10, the reception unit b11, and the transmission unit b14 according to the first embodiment, detailed description thereof will be omitted.

The storage unit b52 includes an RACH slot configuration candidate storage section b121 and an RA signal quantity threshold storage section b522.

Since the RACH slot configuration candidate storage section b121 has the same function as the RACH slot configuration candidate storage section b121 according to the first embodiment, detailed description thereof will be omitted.

The RA signal quantity threshold storage section b522 stores a threshold $T_H$ which is compared with the quantity of RA signals used between the base station apparatus b5 and each mobile telephone apparatus.

The control unit b53 controls each element of the base station apparatus b5. Furthermore, the control unit b53 performs data input/output with respect to a communication unit and the like (not shown) of the base station apparatus b5.

The control unit b53 includes an RA signal quantity detection section b531, an RACH slot configuration determination section b532, an RACH slot configuration decision section b533, and an RACH slot configuration report section b134.

Since the RACH slot configuration report section b134 has the same function as the RACH slot configuration report section b134 according to the first embodiment, detailed description thereof will be omitted.

The RA signal quantity detection section b531 detects the quantity of RA signals received in the reception unit b11 in a predetermined time, and calculates the total signal quantity Z which is the sum of the detected signal quantities.

The RACH slot configuration determination section b532 determines whether the total signal quantity Z detected by the RA signal quantity detection section b531 is equal to or more than the threshold $T_H$ stored in the RA signal quantity threshold storage section b522.

For example, when the threshold $T_H$ is 1000 bits, if the total signal quantity Z detected by the RA signal quantity detection section b531 is 800 bits, the RACH slot configuration determination section b532 determines that "the total signal quantity Z is equal to or less than the threshold $T_H$". If the total signal quantity Z is 1,200 bits, the RACH slot configuration determination section b532 determines that "the total signal quantity Z is equal to or more than the threshold $T_H$".

When the total signal quantity Z has exceeded the threshold $T_H$, that is, when the determination result of the RACH slot configuration determination section b532 has changed, the RACH slot configuration decision section b533 decides an RACH slot configuration to which the mobile telephone apparatus a1 can allocate an RA signal.

Furthermore, the RACH slot configuration decision section b533 reads an RACH slot configuration, which is used when the mobile telephone apparatus a1 currently allocates the RA signal, from the storage unit b52.

In detail, when the determination result of the RACH slot configuration determination section b532 has changed and the total signal quantity Z exceeds the threshold $T_H$, the RACH slot configuration decision section b533 decides an RACH slot configuration as an RACH slot configuration with a configuration number having a resource larger than that of the RACH slot configuration used when the mobile telephone apparatus a1 currently allocates the RA signal.

For example, when the total signal quantity Z previously detected by the RA signal quantity detection section b531 is 800 bits, the RACH slot configuration determination section b532 determines that "the total signal quantity Z is smaller than the threshold 1,000 bits". When the total signal quantity Z detected by the RA signal quantity detection section b531 this time is 1,200 bits, the RACH slot configuration determination section b532 determines that "the total signal quantity Z is equal to or more than the threshold 1,000 bits".

At this time, the RACH slot configuration decision section b533 decides that the determination result of the RACH slot configuration determination section b532 has changed and the total signal quantity Z exceeds the threshold 1,000 bits.

At this time, for example, when the configuration number of the RACH slot configuration used when the mobile telephone apparatus a1 currently allocates the RA signal is the configuration number '1' in FIG. 2, the RACH slot configuration decision section b533 decides an RACH slot configuration as the RACH slot configuration with the configuration number '2', which has a large number of RACH slots in the unit time as compared with the RACH slot configuration with the configuration number '1' and has a resource larger than that of the configuration number.

That is, the RACH slot configuration decision section b533 decides the RACH slot configuration from the RACH slot configurations stored in the RACH slot configuration candidate storage section b121 based on the total signal quantity Z (which is the value representing the receiving frequency of the RA signal).

Meanwhile, when the determination result of the RACH slot configuration determination section b532 has changed and the total signal quantity Z becomes smaller than the threshold 1,000 bits, the RACH slot configuration decision section b533 may also decide the RACH slot configuration as an RACH slot configuration with a configuration number having a resource smaller than that of the RACH slot configuration used when the mobile telephone apparatus a1 currently allocates the RA signal.

For example, when the total signal quantity Z previously detected by the RA signal quantity detection section b531 is 1,200 bits, the RACH slot configuration determination section b532 determines that "the total signal quantity Z is equal to or more than the threshold 1,000 bits". When the total signal quantity Z detected by the RA signal quantity detection section b531 this time is 800 bits, the RACH slot configuration determination section b532 determines that "the total signal quantity Z is smaller than the threshold 1,000 bits".

At this time, for example, when the configuration number of the RACH slot configuration used when the mobile telephone apparatus a1 currently allocates the RA signal is the configuration number '1' in FIG. 2, the RACH slot configuration decision section b533 may also decide an RACH slot configuration as the RACH slot configuration with the configuration number '0', which has a small number of RACH slots in the unit time as compared with the RACH slot configuration with the configuration number '1' and has a resource smaller than that of the configuration number.

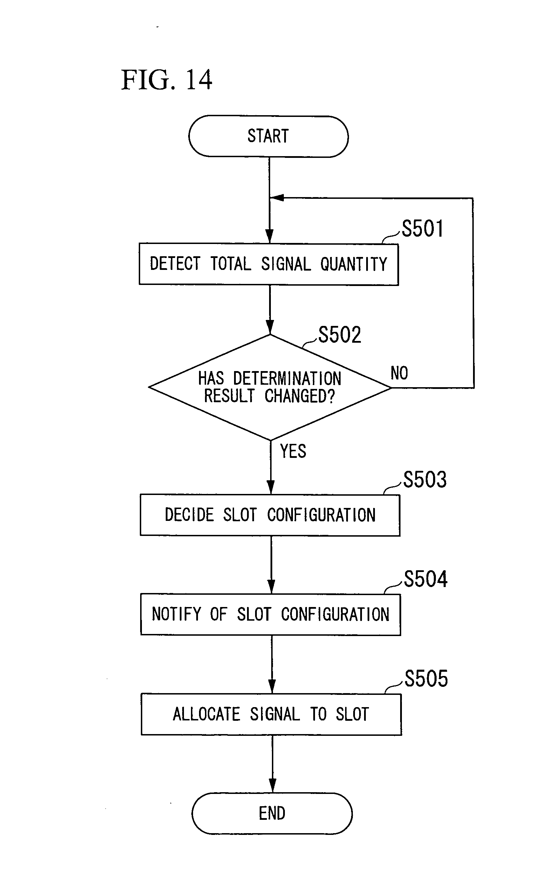

FIG. 14 is a flowchart showing one example of the operation of the wireless communication system according to the present embodiment.

First, the base station apparatus b5 calculates the total signal quantity Z of an RA signal (S501).

Next, the base station apparatus b5 determines whether the determination result of the RACH slot configuration determination section b532 has changed with respect to the total signal quantity Z calculated in S501 (S502).

When it is determined that the determination result of the RACH slot configuration determination section b532 has changed in S502, the base station apparatus b5 proceeds to the process of S503.

Meanwhile, when it is determined that the determination result of the RACH slot configuration determination section b532 has not changed in S502, the base station apparatus b4 proceeds to the process of S501.

The base station apparatus b5 decides an RACH slot configuration (S503). In detail, when the determination result of the RACH slot configuration determination section b532 has changed and the total signal quantity Z exceeds the threshold $T_H$, the base station apparatus b5 decides an RACH slot configuration as an RACH slot configuration which has a large number of RACH slots in the unit time, that is, has a large resource as compared with the current RACH slot configuration. Meanwhile, when the determination result of the RACH slot configuration determination section b532 has changed and the total signal quantity Z becomes lower than the threshold $T_H$, the base station apparatus b5 decides an RACH slot configuration as an RACH slot configuration which has a small number of RACH slots in the unit time, that is, has a small resource as compared with the current RACH slot configuration.

The base station apparatus b5 reports the mobile telephone apparatus a1 of the RACH slot configuration decided through the process of S503 (S504).

The mobile telephone apparatus a1 allocates an RA signal to the RACH slot of the RACH slot configuration reported of through the process of S504 (S505).

As described above, according to the present embodiment, the base station apparatus b5 compares the total signal quantity Z with the threshold $T_H$ stored in advance, and decides an RACH slot configuration based on the comparison result. Furthermore, the mobile telephone apparatus a1 allocates the RA signal to the RACH slot of the RACH slot configuration decided by the base station apparatus b5.

In this way, when the total signal quantity Z of the RA signal is large, the wireless communication system can prevent collision of RA signals from terminals by increasing the number of the RACH slots and increasing a resource. Meanwhile, when the total signal quantity Z is small, the wireless communication system reduces the number of the RACH slots and allocates a part obtained by reducing the RACH slots to user data, so that high connection quality can be ensured and high throughput can be achieved.

(Sixth Embodiment)

Hereinafter, the sixth embodiment of the present invention will be described with reference to the accompanying drawings.

According to the previous embodiments, a base station apparatus decides an RACH slot configuration. According to the wireless communication system of the present embodiment, a mobile telephone apparatus decides an RACH slot configuration based on the detection frequency of an RA signal.

In addition, the conceptual diagram of the communication system is the same as that of FIG. 1 according to the first embodiment.

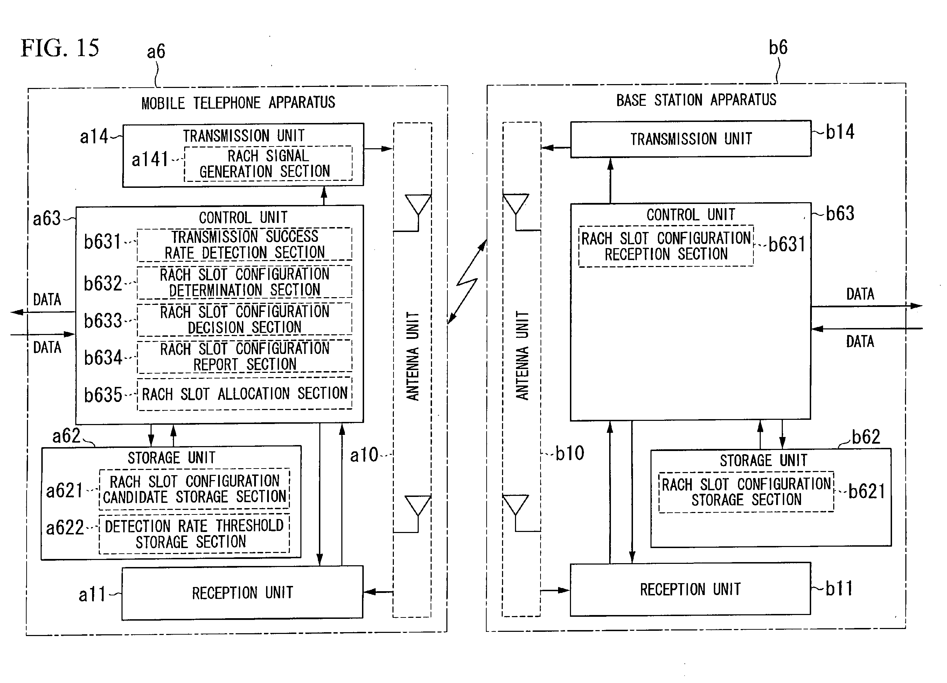

FIG. 15 is a schematic block diagram showing the configuration of the wireless communication system according to the sixth embodiment of the present invention. As shown in FIG. 15, the wireless communication system includes a mobile telephone apparatus a6 (which is the mobile telephone apparatus A1 in FIG. 1) and a base station apparatus b6 (which is the base station apparatus B1 in FIG. 1).

First, the mobile telephone apparatus a6 will be described.

When comparing the mobile telephone apparatus a6 (FIG. 15) according to the present embodiment with the mobile telephone apparatus a1 (FIG. 4) according to the first embodiment, a storage unit a62 and a control unit a63 are different from those in the first embodiment. However, since other elements (an antenna unit a10, a reception unit a11, and a transmission unit a14) have the same functions as the antenna unit a10, the reception unit a11, and the transmission unit a14 according to the first embodiment, detailed description thereof will be omitted.

The storage unit a62 includes an RACH slot configuration candidate storage section a621 (a resource allocation configuration candidate storage section) and a detection rate threshold storage section a622.

Since the RACH slot configuration candidate storage section a621 has the same function as the RACH slot configuration candidate storage section a121 according to the first embodiment, detailed description thereof will be omitted.

The detection rate threshold storage section a622 stores a threshold $T_H$ of a transmission success rate $P_2$ (hereinafter, referred to as transmission success rate $P_2$) of RA signals, which is a value representing the receiving frequency of the RA signal and is a value representing a detection frequency of the RA signal.

In addition, as will be described later, as the transmission success rate $P_2$ falls, the receiving frequency of the RA signal rises. As the transmission success rate $P_2$ rises, the receiving frequency of the RA signal falls.

The control unit a63 controls each element of the mobile telephone apparatus a6. Furthermore, the control unit a63 performs conversion between data and a voice signal, and performs input/output of the voice signal with respect to a speaker unit, a microphone unit and the like (not shown) of the mobile telephone apparatus a6.

The control unit a63 includes a transmission success rate detection section a631, an RACH slot configuration determination section a632, an RACH slot configuration decision section a633 (a resource allocation configuration decision section), an RACH slot configuration report section a634, and an RACH slot allocation section a635.

The transmission success rate detection section a631 detects a response from the base station apparatus b6 with respect to an RA signal transmitted from the mobile telephone apparatus a6, and calculates the transmission success rate $P_2$ which is a value representing the receiving frequency of the RA signal.

In detail, the transmission success rate detection section a631 calculates the number $N_{pre}$ of transmissions of the RA signal transmitted from the mobile telephone apparatus a6 and the number $N_{ack}$ of detections of the response from the base station apparatus b6 until RA is successful, that is, an RA procedure is completed. The transmission success rate detection section a631 calculates the transmission success rate $P_2$ ( = $100 \times N_{ack} / N_{pre}$ ).

For example, when the mobile telephone apparatus a6 transmits the RA signal five times and the response from the base station apparatus b6 is detected once, the transmission success rate $P_2$ has a value of 20%.

In addition, the case may occur where there is no response from the base station apparatus b6. For example, when the RA signal transmitted from the mobile telephone apparatus a6 collides with RA signals transmitted from other mobile telephone apparatuses, the base station apparatus b6 may not transmit a response. As the transmission success rate $P_2$ falls, collision probability rises, that is, the receiving frequency of the RA signal rises.

The RACH slot configuration determination section a632 determines whether the transmission success rate $P_2$ detected by the transmission success rate detection section a631 is equal to or more than the threshold $T_H$ stored in the detection rate threshold storage section a622.

For example, when the threshold $T_H$ is 50%, if the transmission success rate $P_2$ detected by the transmission success rate detection section a631 is 54%, the RACH slot configuration determination section a632 determines that "the transmission success rate $P_2$ is equal to or more than the threshold 50%". If the transmission success rate $P_2$ is 46%, the RACH slot configuration determination section a632 determines that "the transmission success rate $P_2$ is smaller than the threshold 50%".

When the transmission success rate $P_2$ has exceeded the threshold $T_H$, that is, when the determination result of the RACH slot configuration determination section a632 has changed, the RACH slot configuration decision section a633 decides an RACH slot configuration to which the mobile telephone apparatus a6 can allocate an RA signal.

Furthermore, the RACH slot configuration decision section a633 reads the configuration number of an RACH slot configuration, which is used when the mobile telephone apparatus a6 currently allocates the RA signal, from the storage unit a62.

In detail, when the determination result of the RACH slot configuration determination section a632 has changed and the transmission success rate $P_2$ becomes lower than the threshold $T_H$, which indicates that the receiving frequency is high, the RACH slot configuration decision section a633 decides an RACH slot configuration as an RACH slot configuration with a configuration number having a resource larger than that of the RACH slot configuration used when the mobile telephone apparatus a6 currently allocates the RA signal.

For example, if the transmission success rate $P_2$ previously detected by the transmission success rate detection section a631 is 54%, the RACH slot configuration determination section a632 determines that "the transmission success rate $P_2$ is equal to or more than the threshold 50%". If the transmission success rate $P_2$ detected by the transmission success rate detection section a631 this time is 46%, the RACH slot configuration determination section a632 determines that "the transmission success rate $P_2$ is smaller than the threshold 50%".

At this time, the RACH slot configuration decision section a633 decides that the determination result of the RACH slot configuration determination section a632 has changed and the transmission success rate $P_2$ becomes lower than the threshold 50%. For example, when the configuration number of the RACH slot configuration used when the mobile telephone apparatus a6 currently allocates the RA signal is the configuration number '1' in FIG. 2, the RACH slot configuration decision section a633 decides an RACH slot configuration as the RACH slot configuration with the configuration number '2', which has a large number of RACH slots in the unit time as compared with the RACH slot configuration with the configuration number '1' and has a resource larger than that of the configuration number.

That is, the RACH slot configuration decision section a633 decides the RACH slot configuration from the RACH slot configurations stored in the RACH slot configuration candidate storage section b121 based on the transmission success rate $P_2$ (which is the value representing the receiving frequency of the RA signal).

Meanwhile, when the determination result of the RACH slot configuration determination section a632 has changed and the transmission success rate $P_2$ exceeds the threshold $T_H$, the RACH slot configuration decision section a633 may also decide the RACH slot configuration as an RACH slot configuration with a configuration number having a resource smaller than that of the RACH slot configuration used when the mobile telephone apparatus a6 currently allocates the RA signal.

The RACH slot configuration report section a634 transmits the RACH slot configuration decided by the RACH slot configuration decision section a633 to the base station apparatus b6 through the transmission unit a14 and the antenna unit a10.

The RACH slot allocation section a635 allocates an RA signal to the RACH slot of the RACH slot configuration transmitted from the RACH slot configuration report section a634.

Next, the base station apparatus b6 will be described.

When comparing the base station apparatus b6 (FIG. 15) according to the present embodiment with the base station apparatus b1 (FIG. 4) according to the first embodiment, a storage unit b62 and a control unit b63 are different from those in the first embodiment. However, since other elements (an antenna unit b10, a reception unit b11, and a transmission unit b14) have the same functions as the antenna unit b10, the reception unit b11, and the transmission unit b14 according to the first embodiment, detailed description thereof will be omitted.

The control unit b63 controls each element of the base station apparatus b6. Furthermore, the control unit b63 performs data input/output with respect to a communication unit and the like (not shown) of the base station apparatus b6. The control unit b63 includes an RACH slot configuration reception section b631.

The RACH slot configuration reception section b631 stores the configuration number of the RACH slot configuration reported of from the RACH slot configuration report section a634 of the mobile telephone apparatus a6 in an RACH slot configuration storage section b621.

The control unit b63 reads the configuration number of the RACH slot configuration stored in the RACH slot configuration storage section b621, and receives the RA signal allocated to the RACH slot of the RACH slot configuration.

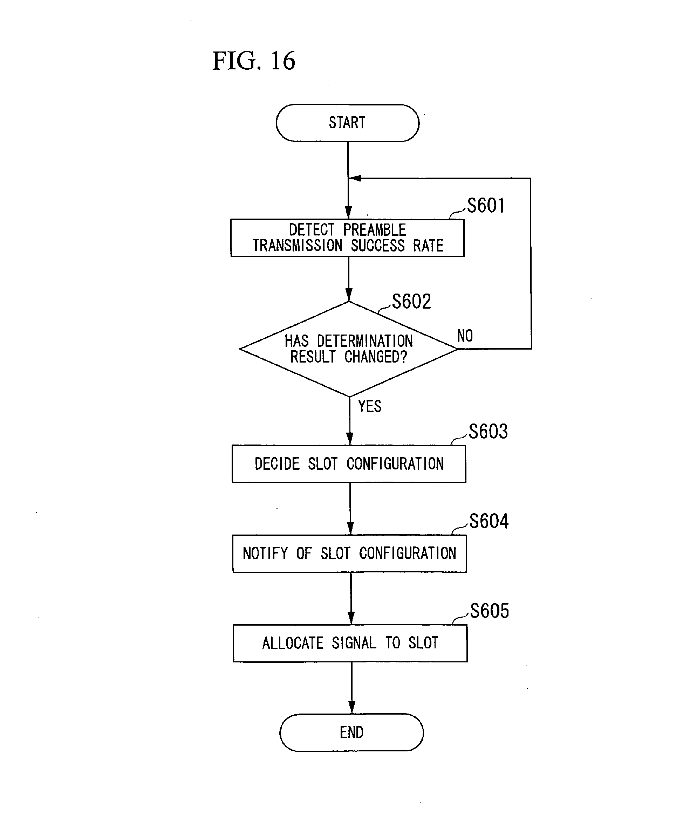

FIG. 16 is a flowchart showing one example of the operation of the wireless communication system according to the present embodiment.

First, the mobile telephone apparatus a6 detects the number of transmissions of the RA signal and the number of detections of the response from the base station apparatus b6, and calculates the transmission success rate $P_2$ of the RA signal (S601).

Next, the mobile telephone apparatus a6 determines whether the determination result of the RACH slot configuration determination section a632 has changed with respect to the transmission success rate $P_2$ of the RA signal calculated in S601 (S602).

When it is determined that the determination result of the RACH slot configuration determination section a632 has changed in S602, the mobile telephone apparatus a6 proceeds to the process of S603.

Meanwhile, when it is determined that the determination result of the RACH slot configuration determination section a632 has not changed in S602, the mobile telephone apparatus a6 proceeds to the process of S601.

The mobile telephone apparatus a6 decides an RACH slot configuration (S603). In detail, when the determination result of the RACH slot configuration determination section a632 has changed and the transmission success rate $P_2$ becomes lower than the threshold $T_H$, the mobile telephone apparatus a6 decides an RACH slot configuration as an RACH slot configuration which has a large number of RACH slots in the unit time, that is, has a large resource as compared with the current RACH slot configuration. Meanwhile, when the determination result of the RACH slot configuration determination section a632 has changed and the transmission success rate $P_2$ exceeds the threshold $T_H$, the mobile telephone apparatus a6 decides an RACH slot configuration as an RACH slot configuration which has a small number of RACH slots in the unit time, that is, has a small resource as compared with the current RACH slot configuration. The mobile telephone apparatus a6 reports the base station apparatus b6 of the RACH slot configuration decided through the process of S603 (S604).

The mobile telephone apparatus a6 allocates an RA signal to the RACH slot of the RACH slot configuration decided through the process of S603 (S605).

As described above, according to the present embodiment, the mobile telephone apparatus a6 compares the transmission success rate $P_2$ of the RA signal with the threshold $T_H$ stored in advance, and decides an RACH slot configuration based on the comparison result. Furthermore, the base station apparatus b6 allocates the RA signal to the RACH slot of the RACH slot configuration decided by the mobile telephone apparatus a6.

In this way, when the transmission success rate $P_2$ is low and the receiving frequency of the RA signal is high, the wireless communication system can prevent collision of generated RA signals by increasing the RACH slots. Meanwhile, when the transmission success rate $P_2$ is high and the receiving frequency of the RA signal is low, the wireless communication system can increase resources allocable to other communication by reducing the RACH slots of the RACH slot configuration. Consequently, the wireless communication system can ensure high connection quality and achieve high throughput.

Furthermore, in the first embodiment, the present number may also be any one of the number of mobile telephone apparatuses capable of communicating with the base station apparatus b1, or the number of mobile telephone apparatuses which are communicating with the base station apparatus b1 through cell search and the like. Otherwise, the present number may also be the sum of the number of mobile telephone apparatuses capable of communicating with the base station apparatus b1 and the number of mobile telephone apparatuses which are communicating with the base station apparatus b1.

Furthermore, in the second embodiment, the base station apparatus b2 fixes the time slot T (daytime/night/ late night/early morning and the like). However, the present invention is not limited thereto. An arbitrary time slot T may also be set from the statistics of past communication history. Furthermore, whether the current time is included in the time slot T may also be determined according to whether the current time crosses a start time or a finish time of a time slot. In addition, the base station apparatus b2 may also decide an RACH slot configuration every constant time or according to an event opening time.

Moreover, in the third embodiment, the base station apparatus b3 decides an RACH slot configuration based on the detection rate $P_1$ of an RA signal. However, the present invention is not limited thereto. For example, the base station apparatus b3 may also decide an RACH slot configuration based on the transmission success rate $P_2$ of an RA signal.

For example, a mobile telephone apparatus has a function the same as that of the transmission success rate detection section a631 of the mobile telephone apparatus a6, and transmits the transmission success rate $P_2$ of the RA signal detected using the function to a base station apparatus. The base station apparatus calculates an average value of the transmission success rates $P_2$ of RA signals received from a plurality of mobile telephone apparatuses in a predetermined time. The base station apparatus may also compare the calculated average value of the transmission success rate $P_2$ of the RA signals with the threshold $T_H$ of the transmission success rate of the RA signal stored in advance, and decide an RACH slot configuration, similarly to the RACH slot configuration decision section a633.

Furthermore, in the third and sixth embodiments, the base station apparatus b3 and the mobile telephone apparatus a6 decide an RACH slot configuration based on the detection rate $P_1$ of an RA signal and the transmission success rates $P_2$ of an RA signal, respectively. However, the present invention is not limited thereto. The base station apparatus b3 and the mobile telephone apparatus a6 may also decide an RACH slot configuration based on a non-detection rate of a preamble, an erroneous detection rate or collision probability.

In addition, in the fourth embodiment, the base station apparatus b4 decides an RACH slot configuration based on the total traffic amount Y. However, the present invention is not limited thereto. For example, the base station apparatus b4 may also decide an RACH slot configuration based on variation $\Delta Y$ of the total traffic amount Y. Herein, the variation $\Delta Y = ( Y - Y_1 ) / Y_1$ is calculated using a preset total traffic amount $Y_1$ (e.g., 1 Gbyte) and the present total traffic amount Y.

In such a case, for example, when the configuration number '1' is used as the total traffic amount $Y_1$ (e.g., 1 Gbyte), the base station apparatus b4 stores the configuration number '2' corresponding to the variation $\Delta Y$ of the total traffic amount Y which is larger than the threshold $T_H$ (+50%). Furthermore, the base station apparatus b4 stores the configuration number '1' corresponding to the variation $\Delta Y$ of the total traffic amount Y which is smaller than the threshold $T_H$ (+50%). The base station apparatus b4 calculates the variation $\Delta Y$ of the total traffic amount Y and determines whether the variation $\Delta Y$ is equal to or more than the threshold $T_H$ (+50%). As a result of the determination, if the variation $\Delta Y$ of the total traffic amount Y is equal to or more than the threshold $T_H$ (+50%), the base station apparatus b4 decides the RACH slot configuration with the configuration number '2'.

Moreover, in the fourth embodiment, the base station apparatus b4 decides an RACH slot configuration using the threshold. However, the present invention is not limited thereto. The moment for determining the RACH slot configuration may also be appropriately changed without using the threshold when a network operator determines that throughput in a cell is temporarily increased.

Furthermore, in the first and second embodiments, the base station apparatuses b1 and b2 store in advance an RACH slot configuration corresponding to a value indicating the receiving frequency of an RA signal, and decide the RACH slot configuration as an RACH slot configuration corresponding to the value indicating the receiving frequency of a detected RA signal. However, the present invention is not limited thereto. As with the base station apparatus b3 according to the third embodiment, the base station apparatuses b1 and b2 may also determine whether the value indicating the receiving frequency of the detected RA signal exceeds or becomes lower than the threshold $T_H$, and decide the RACH slot configuration.

In addition, in the third and sixth embodiments, the base station apparatus b3 and the mobile telephone apparatus a6 determine whether the value indicating the receiving frequency of the detected RA signal exceeds or becomes lower than the threshold $T_H$, and decide the RACH slot configuration.

However, the present invention is not limited thereto. For example, as with the base station apparatus b1 according to the first embodiment and the base station apparatus b2 according to the second embodiment, the base station apparatus b3 and the mobile telephone apparatus a6 may also store in advance the RACH slot configuration corresponding to the value indicating the receiving frequency of the RA signal (refer to Tables 1 and 2), and decide the RACH slot configuration as the RACH slot configuration corresponding to the value indicating the receiving frequency of the detected RA signal.

Moreover, in the previous embodiments, an example of the threshold of the value indicating the receiving frequency of the RA signal has been described. However, the threshold may also be set in plurality.

In addition, in the first, third and sixth embodiments, the base station apparatus b1, the base station apparatus b3 and the mobile telephone apparatus a6 decide the RACH slot configuration based on the present number X, the detection rate $P_1$ of the RA signal, and the transmission success rate $P_2$ of the RA signal, respectively. However, the present invention is not limited thereto. For example, as with the fourth embodiment, it may also be possible to decide the RACH slot configuration based on variation of the present number X, variation of the detection rate $P_1$ of the RA signal, and variation of the transmission success rate $P_2$ of the RA signal.

Furthermore, the reception unit a11, the control unit a13, the control unit a63, and the transmission unit a14 are realized by reading and executing a program stored in the storage unit a12 or the storage unit a62, or by an electronic circuit.

In addition, the reception unit b11, the control units b13, b23, b33, b43, b53 and b63, and the transmission unit b14 are realized by reading and executing a program stored in the storage units b 12, b22, b32, b42, b52 and b62, or by an electronic circuit.

Moreover, the storage units b12, b22, b32, b42, b52 and b62, the storage unit a12, and the storage unit a62 store data, and are realized using a magnetic hard disk device or a semiconductor memory.

Furthermore, a part of the base station apparatuses b1 to b4 in the previous embodiments, for example, the RACH slot configuration decision sections b133, b233, b333 and b433, the RACH slot configuration decision section a633, the present number detection section b131, the time detection section b231, the RA signal reception rate detection section b331, the total traffic amount detection section b431, the RACH slot configuration determination section b132, the RACH slot configuration reception section b631, and the RACH slot configuration determination section b632, may also be realized by a computer. In such a case, a program for realizing the control function thereof may be recorded on a computer-readable recording medium, and may be read and executed by a computer system embedded in a base station apparatus or a mobile telephone apparatus. The "computer system" herein includes an OS and hardware of a peripheral device and the like. In addition, the "computer-readable recording medium" indicates a portable medium such as a flexible disk, a magnetic optical disk, a ROM or a CD-ROM, and a storage device such as a hard disk embedded in the computer system. Moreover, the "computer-readable recording medium" may include a medium that dynamically stores a program in a short time as with a communication line when the program is transmitted through a network (e.g., the Internet) or a communication line (e.g., a phone line), and a medium that stores the program for a constant time as with a volatile memory in the computer system serving as a server or a client in the above case. Furthermore, the program may realize a part of the above-described functions, or realize the above-described functions through a combination with all programs recorded in the computer system.

While the present invention has been described with respect to the specific embodiments, it will be apparent to those skilled in the art that various changes and modifications may be made without departing from the spirit and scope of the invention as defined in the following claims.

[Industrial Applicability]

The present invention is appropriately used in a wireless communication system, a communication apparatus, and technology similar to the wireless communication system and the communication apparatus, so that high connection quality can be ensured and high throughput can be achieved.

[Description of Reference Numerals]

A1~3, a1··· Mobile telephone apparatus, B1, 2, b1~b6··· Base station apparatus, a10··· Antenna unit, a11··· Reception unit, a12, a62··· Storage unit, a13, a63··· Control unit, a14··· Transmission unit, a121··· RACH slot configuration storage section, a131··· RACH slot configuration receiving section, a132, a635··· RACH slot allocation section (Band allocation section), a141··· RACH signal generation section, a621··· RACH slot configuration candidate storage section (Band allocation configuration candidate storage section), a622··· Detection rate threshold storage section, a631··· Transmission success rate detection section, a632··· RACH slot configuration determination section, a633··· RACH slot configuration decision section (Band allocation configuration decision section), a634··· RACH slot configuration report section, b10··· Antenna unit, b11··· Reception unit, b12, b22, b32, b42, b52, b62··· Storage unit, b13, b23, b33, b43, b53, b63··· Control unit, b14··· Transmission unit, b121··· RACH slot configuration candidate storage section (Band allocation configuration candidate storage section), b122··· Present number threshold storage section, b222··· Time slot information storage section, b322··· Reception rate threshold storage section, b422··· Total traffic amount threshold storage section, b522··· RA signal quantity threshold storage section, b131··· Present number detection section, b231··· Time detection section, b331··· RA signal reception rate detection section, b431··· Total traffic amount detection section, b531··· RA signal quantity detection section, b132, b232, b332, b432, b532··· RACH slot configuration determination section, b133, b233, b333, b433, b533··· RACH slot configuration decision section (Band allocation configuration decision section), b134··· RACH slot configuration report section, b621··· RACH slot configuration storage section, b631··· RACH slot configuration reception section

## Claims

1. A wireless communication system comprising a first communication apparatus allocating random access (RA) signals to resources to transmit RA signals, and a second communication apparatus receiving the RA signals transmitted from the first communication apparatus,
   wherein the second communication apparatus comprises:

   a resource allocation configuration candidate storage section that stores in advance a plurality of different resource allocation configurations which are combinations of the resources, the combinations having different sizes;
   a resource allocation configuration decision section that decides a resource allocation configuration from the plurality of different resource allocation configurations stored in the resource allocation configuration candidate storage section based on a value indicating a receiving frequency of the RA signal; and
   a resource allocation configuration report section that reports information of the resource allocation configuration decided by the resource allocation configuration decision section, and
   wherein the first communication apparatus comprises a resource allocation section that allocates the RA signals to the resources of the resource allocation configuration of the information reported from the resource allocation configuration report section of the second communication apparatus.

2. The wireless communication system according to claim 1, wherein the resource allocation configuration decision section decides a resource allocation configuration from the resource allocation configurations stored in the resource allocation configuration candidate storage section based on a variation of the value indicating the receiving frequency of the RA signal.

3. The wireless communication system according to claim 1 or 2, wherein the wireless communication system comprises a plurality of the first communication apparatuses, the value indicating the receiving frequency of the RA signal is the number of the first communication apparatus present in a cell which is a communication range of the second communication apparatus.

4. The wireless communication system according to claim 1, wherein the value indicating the receiving frequency of the RA signals is a point of time.

5. The wireless communication system according to claim 1 or 2, wherein the value indicating the receiving frequency of the RA signals is a frequency of detecting the RA signals.

6. The wireless communication system according to claim 1 or 2, wherein the wireless communication system comprises a plurality of the first communication apparatuses, the plurality of the first communication apparatuses and the second communication apparatus perform a communication of a signal other than the RA signals, and the value indicating the receiving frequency of the RA signal is an amount of communication information between the plurality of the first communication apparatuses and the second communication apparatus, and the amount of communication information including at least an amount of communication information regarding the communication of the signal other than the RA signals.

7. The wireless communication system according to claim 1 or 2, wherein the value indicating the receiving frequency of the RA signals is an amount of communication information of the RA signals.

8. A communication apparatus that receives random access (RA) signals transmitted by being allocated to preset resources, comprising:

a resource allocation configuration candidate storage section that stores in advance a plurality of different resource allocation configurations which are combinations of the resources, the combinations having different sizes;

a resource allocation configuration decision section that decides a resource allocation configuration from the plurality of different resource allocation configurations stored in the resource allocation configuration candidate storage section based on a value indicating a receiving frequency of the RA signal; and

a resource allocation configuration report section that reports of information of the resource allocation configuration decided by the resource allocation configuration decision section.

9. A wireless communication method in a communication apparatus that receives random access (RA) signals transmitted by being allocated to preset resources, comprising:

a first process of deciding, by the communication apparatus, a resource allocation configuration from the plurality of different resource allocation configurations, which are combinations of the resources, the combinations having different sizes, based on a value indicating a receiving frequency of the RA signal; and

a second process of reporting, by the communication apparatus, of information of the resource allocation configuration decided in the first process.

10. A wireless communication program that causes a computer of a communication apparatus, which receives random access (RA) signals transmitted by being allocated to preset resources, to function as:

a resource allocation configuration decision means for deciding a resource allocation configuration from the plurality of different resource allocation configurations, which are combinations of the resources, the combinations having different sizes, based on a value indicating a receiving frequency of the RA signal; and

a resource allocation configuration report means for reporting of information of the resource allocation configuration decided by the resource allocation configuration decision means.

FIG. 1

EP 2 296 423 A1

FIG. 2

| CONFIGURATION   NUMBER | RA PERIOD | RA SUB—FRAME NUMBER |
|---|---|---|
| 0 | 20 | 4 |
| 1 | 10 | 4 |
| 2 | 5 | 2 |
| . . . | . . . | . . . |

# FIG. 3A

WHEN CONFIGURATION NUMBER IS 0

FREQUENCY

0 1 2 3 4 5 6 7 8 9 10 11 12 13 14 15 16 17 18 19 0 1 2 3 4 5 6 7 8 9 10 11 12 13 14 15 16 17 18 19

TIME          RA PERIOD=20

# FIG. 3B

WHEN CONFIGURATION NUMBER IS 1

FREQUENCY

0 1 2 3 4 5 6 7 8 9 0 1 2 3 4 5 6 7 8 9 0 1 2 3 4 5 6 7 8 9 0 1 2 3 4 5 6 7 8 9

TIME          RA PERIOD=10

# FIG. 3C

WHEN CONFIGURATION NUMBER IS 2

FREQUENCY

0 1 2 3 4 0 1 2 3 4 0 1 2 3 4 0 1 2 3 4 0 1 2 3 4 0 1 2 3 4 0 1 2 3 4 0 1 2 3 4

TIME     RA PERIOD=5

FIG. 4

MOBILE TELEPHONE APPARATUS — a1

- TRANSMISSION UNIT — a14
  - RACH SIGNAL GENERATION SECTION — a141
- CONTROL UNIT — a13
  - RACH SLOT CONFIGURATION RECEIVING SECTION — a131
  - RACH SLOT ALLOCATION SECTION — a132
- STORAGE UNIT — a12
  - RACH SLOT CONFIGURATION STORAGE SECTION — a121
- RECEPTION UNIT — a11

DATA

DATA

ANTENNA UNIT — a10

BASE STATION APPARATUS — b1

ANTENNA UNIT — b10

- TRANSMISSION UNIT — b14
- CONTROL UNIT — b13
  - PRESENT NUMBER DETECTION SECTION — b131
  - RACH SLOT CONFIGURATION DETERMINATION SECTION — b132
  - RACH SLOT CONFIGURATION DECISION SECTION — b133
  - RACH SLOT CONFIGURATION REPORT SECTION — b134
- STORAGE UNIT — b12
  - RACH SLOT CONFIGURATION CANDIDATE STORAGE SECTION — b121
  - PRESENT NUMBER THRESHOLD STORAGE SECTION — b122
- RECEPTION UNIT — b11

DATA

DATA

EP 2 296 423 A1

FIG. 5

```
        ┌─────────────┐
        │    START    │
        └─────────────┘
               │
               ▼                        ⌐S101
   ┌───────────────────────────┐
   │  DETECT PRESENT NUMBER X   │
   └───────────────────────────┘
               │
               ▼                        ⌐S102
   ┌───────────────────────────┐
   │ DETERMINE PRESENT NUMBER X │
   └───────────────────────────┘
               │
               ▼                        ⌐S103
   ┌───────────────────────────┐
   │   DECIDE SLOT CONFIGURATION │
   └───────────────────────────┘
               │
               ▼                        ⌐S104
   ┌───────────────────────────┐
   │  NOTIFY OF SLOT CONFIGURATION │
   └───────────────────────────┘
               │
               ▼                        ⌐S105
   ┌───────────────────────────┐
   │   ALLOCATE SIGNAL TO SLOT   │
   └───────────────────────────┘
               │
               ▼
        ┌─────────────┐
        │     END     │
        └─────────────┘
```

FIG. 6

MOBILE TELEPHONE APPARATUS — a1

TRANSMISSION UNIT — a14
RACH SIGNAL GENERATION SECTION — a141

CONTROL UNIT — a13
RACH SLOT CONFIGURATION RECEIVING SECTION — a131
RACH SLOT ALLOCATION SECTION — a132

DATA

DATA

STORAGE UNIT — a12
RRACH SLOT CONFIGURATION STORAGE SECTION — a121

ANTENNA UNIT — a10

RECEPTION UNIT — a11

BASE STATION APPARATUS — b2

TRANSMISSION UNIT — b14

CONTROL UNIT — b23
TIME DETECTION SECTION — b231
RACH SLOT CONFIGURATION DETERMINATION SECTION — b232
RACH SLOT CONFIGURATION DECISION SECTION — b233
RACH SLOT CONFIGURATION REPORT SECTION — b134

DATA

DATA

ANTENNA UNIT — b10

STORAGE UNIT — b22
RACH SLOT CONFIGURATION CANDIDATE STORAGE SECTION — b121
TIME SLOT INFORMATION STORAGE SECTION — b222

RECEPTION UNIT — b11

EP 2 296 423 A1

# FIG. 7

```
        ┌─────────────┐
        │    START    │
        └─────────────┘
               │
               ▼
    ┌───────────────────────┐      S201
    │     DETECT TIME T     │
    └───────────────────────┘
               │
               ▼
    ┌───────────────────────┐      S202
    │ DETERMINE TIME SLOT OF TIME T │
    └───────────────────────┘
               │
               ▼
    ┌───────────────────────┐      S203
    │  DECIDE SLOT CONFIGURATION  │
    └───────────────────────┘
               │
               ▼
    ┌───────────────────────┐      S204
    │ NOTIFY OF SLOT CONFIGURATION │
    └───────────────────────┘
               │
               ▼
    ┌───────────────────────┐      S205
    │  ALLOCATE SIGNAL TO SLOT   │
    └───────────────────────┘
               │
               ▼
        ┌─────────────┐
        │     END     │
        └─────────────┘
```

FIG. 8

a1 — MOBILE TELEPHONE APPARATUS

a14 — TRANSMISSION UNIT
a141 — RACH SIGNAL GENERATION SECTION

a13 — CONTROL UNIT
a131 — RACH SLOT CONFIGURATION RECEIVING SECTION
a132 — RACH SLOT ALLOCATION SECTION

DATA
DATA
DATA

a12 — STORAGE UNIT
a121 — RACH SLOT CONFIGURATION STORAGE SECTION

a11 — RECEPTION UNIT

ANTENNA UNIT
a10

ANTENNA UNIT
b10

b3 — BASE STATION APPARATUS

TRANSMISSION UNIT — b14

CONTROL UNIT — b33
RA SIGNAL RECEPTION RATE DETECTION SECTION — b331
RACH SLOT CONFIGURATION DETERMINATION SECTION — b332
RACH SLOT CONFIGURATION DECISION SECTION — b333
RACH SLOT CONFIGURATION REPORT SECTION — b134

DATA
DATA

STORAGE UNIT — b32
RACH SLOT CONFIGURATION CANDIDATE STORAGE SECTION — b121
RECEPTION RATE THRESHOLD STORAGE SECTION — b322

RECEPTION UNIT — b11

EP 2 296 423 A1

# FIG. 9

EP 2 296 423 A1

FIG. 10

```
          ┌─────────────┐
          │    START    │
          └──────┬──────┘
                 │
                 ▼
          ┌──────────────────────┐   S301
          │  CALCULATE PREAMBLE  │
          │   DETECTION RATE     │
          └──────────┬───────────┘
                     │
                     ▼                  S302
                  ╱──────────────╲
                 ╱ HAS DETERMINATION ╲   NO
                 ╲ RESULT CHANGED?  ╱────────┐
                  ╲──────────────╱           │
                     │ YES                   │
                     ▼                  S303  │
          ┌──────────────────────┐           │
          │ DECIDE SLOT CONFIGURATION │      │
          └──────────┬───────────┘           │
                     │                         (to S301)
                     ▼                  S304
          ┌──────────────────────┐
          │ NOTIFY OF SLOT CONFIGURATION │
          └──────────┬───────────┘
                     │
                     ▼                  S305
          ┌──────────────────────┐
          │  ALLOCATE SIGNAL TO SLOT │
          └──────────┬───────────┘
                     │
                     ▼
          ┌─────────────┐
          │     END     │
          └─────────────┘
```

FIG. 11

FIG. 12

```
        ┌─────────────┐
        │    START    │
        └─────────────┘
               │
               ▼                          S401
    ┌─────────────────────────┐
    │ DETECT TOTAL TRAFFIC AMOUNT │
    └─────────────────────────┘
               │
               ▼              S402
            ╱─────────╲
          ╱             ╲         NO
        ╱  HAS DETERMINATION ╲────────┐
        ╲  RESULT CHANGED?  ╱         │
          ╲             ╱             │
            ╲─────────╱               │
               │ YES                  │
               ▼              S403     │
    ┌─────────────────────────┐       │
    │  DECIDE SLOT CONFIGURATION │     │
    └─────────────────────────┘       │
               │                      │
               ▼              S404     │
    ┌─────────────────────────┐       │
    │ NOTIFY OF SLOT CONFIGURATION │   │
    └─────────────────────────┘       │
               │                      │
               ▼              S405     │
    ┌─────────────────────────┐       │
    │   ALLOCATE SIGNAL TO SLOT │      │
    └─────────────────────────┘       │
               │                      │
               ▼                      │
        ┌─────────────┐               │
        │     END     │               │
        └─────────────┘               │
```

FIG. 13

EP 2 296 423 A1

## FIG. 14

```
        ┌─────────────┐
        │    START    │
        └─────────────┘
               │
               ▼
                                    ╭─ S501
   ┌──────────────────────────────┐
   │  DETECT TOTAL SIGNAL QUANTITY │
   └──────────────────────────────┘
               │
               ▼
                    ╭─ S502
          ╱───────────────────╲           NO
         ╱   HAS DETERMINATION  ╲──────────┐
         ╲   RESULT CHANGED?    ╱          │
          ╲───────────────────╱           │
               │                          │
              YES                         │
               │
               ▼
                                    ╭─ S503
   ┌──────────────────────────────┐
   │   DECIDE SLOT CONFIGURATION   │
   └──────────────────────────────┘
               │
               ▼
                                    ╭─ S504
   ┌──────────────────────────────┐
   │  NOTIFY OF SLOT CONFIGURATION │
   └──────────────────────────────┘
               │
               ▼
                                    ╭─ S505
   ┌──────────────────────────────┐
   │    ALLOCATE SIGNAL TO SLOT    │
   └──────────────────────────────┘
               │
               ▼
        ┌─────────────┐
        │     END     │
        └─────────────┘
```

FIG. 15

EP 2 296 423 A1

# FIG. 16

```
                    ┌─────────────┐
                    │    START    │
                    └─────────────┘
                           │
                           ▼
              ┌────────────────────────────┐  ╱S601
              │      DETECT PREAMBLE        │
              │  TRANSMISSION SUCCESS RATE  │
              └────────────────────────────┘
                           │
                           ▼
                        ╱S602
                   ╱─────────────╲
                  ╱  HAS DETERMINATION ╲      NO
                 ╱   RESULT CHANGED?    ╲──────────┐
                  ╲                    ╱           │
                   ╲─────────────────╱            │
                           │ YES                   │
                           ▼                       │
              ┌────────────────────────────┐  ╱S603
              │   DECIDE SLOT CONFIGURATION │
              └────────────────────────────┘
                           │
                           ▼
              ┌────────────────────────────┐  ╱S604
              │  NOTIFY OF SLOT CONFIGURATION │
              └────────────────────────────┘
                           │
                           ▼
              ┌────────────────────────────┐  ╱S605
              │    ALLOCATE SIGNAL TO SLOT  │
              └────────────────────────────┘
                           │
                           ▼
                    ┌─────────────┐
                    │     END     │
                    └─────────────┘
```

| | | |
|---|---|---|
| **INTERNATIONAL SEARCH REPORT** | International application No. | |
| | PCT/JP2009/060747 | |

A. CLASSIFICATION OF SUBJECT MATTER
*H04W74/08(2009.01)i, H04W72/04(2009.01)i*

According to International Patent Classification (IPC) or to both national classification and IPC

B. FIELDS SEARCHED

Minimum documentation searched (classification system followed by classification symbols)
H04W74/08, H04W72/04

Documentation searched other than minimum documentation to the extent that such documents are included in the fields searched
Jitsuyo Shinan Koho 1922-1996 Jitsuyo Shinan Toroku Koho 1996-2009
Kokai Jitsuyo Shinan Koho 1971-2009 Toroku Jitsuyo Shinan Koho 1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | NTT DoCoMo, Inc., Summary of email discussion on RACH load eNB measurement, [online], 3GPP TSG RAN WG2 #60, 2007.11.09, R2-075152, [retrieved on 2009-06-24]. Retrieved from the Internet:<http://webstats.3gpp.org/ftp/tsg_ ran/WG2_RL2/TSGR2_60/Docs/R2-075152.zip> | 1,2,5,7-10<br>3,4,6 |
| Y<br>A | Texas Instruments, Random Access Slot Configurations, [online], 3GPP TSG RAN WG1 #50, 2007.08.24, R1-073436, [retrieved on 2009-06-24]. Retrieved from the Internet: <http://www.3gpp.org/ftp/tsg_ran/wg1_rl1/ TSGR1_50/Docs/R1-073436.zip> | 1,2,5,7-10<br>3,4,6 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>24 June, 2009 (24.06.09) | Date of mailing of the international search report<br>07 July, 2009 (07.07.09) |
| Name and mailing address of the ISA/<br>Japanese Patent Office | Authorized officer |
| Facsimile No. | Telephone No. |

Form PCT/ISA/210 (second sheet) (April 2007)

**EP 2 296 423 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008174817 A
- JP 2006333404 A
- JP 2001136570 A